# EUROPEAN PATENT APPLICATION

(11) **EP 4 647 217 A1**
(43) Date of publication of application: **12.11.2025**
(21) Application number: 24174668.4
(22) Date of filing: 07.05.2024
(51) Int. Cl.: B25J 9/16

(54) **TASKING ROBOTS USING A JOB DATA STRUCTURE**

(71) Applicant: Jungheinrich AG, 22047 Hamburg (DE)
(72) Inventor: Gemignani, Guglielmo, 81369 Munich (DE); Mansilla Martin, Roman, 81249 Munich (DE); Grimm, Markus, 86567 Hilgertshausen (DE); Maerz, Michael, 81373 Munich (DE); Tenorth, Moritz, 85386 Eching (DE); Ngan, Calvin, 81543 Munich (DE)
(74) Representative: Stellbrink & Partner Patentanwälte mbB

(57) **Abstract**

The present invention relates to a method for tasking a robot. The method comprises (a) receiving with an interface component at least one tasking message descriptive of at least one robot task; (b) executing with the interface component an interface module to generate based on the at least one tasking message at least one job descriptive of the at least one robot task, wherein each of the at least one job is an instance of a job data structure; (c) receiving with an executor component the at least one job; and (d) executing with the executor component an executor module to cause the robot to perform the at least one robot task based on the at least one job.

The present invention also relates to a system configured to carry out the method.

## Description

The present invention is directed to controlling robots using behavior trees. In particular, the present invention is directed to tasking robots using a job data structure.

Robots are increasingly being used in various industries and for various purposes. Recently, robots are increasingly being used in environments where the robots are not only performing simple tasks, but are performing more versatile tasks and are required to "make decisions", e.g., react to influences from the environment.

Behavior trees (BTs) have emerged as a popular approach for designing complex robot behaviors. For example, WO 2017/148830 A1 and US 2022/0244708 A1 relate to the use of behavior trees to control a robot.

Behavior trees are a representation of the plans that robots need to execute. A common problem faced in the field of controlling robots with behavior trees is how to condition these trees to execute intended actions. Moreover, existing techniques require modifications of the behavior tree every time a different tasking entity is used to control the respective robots.

The present invention alleviates the shortcomings of existing techniques for tasking robots.

In a first aspect, the present invention relates to method for tasking a robot. The method comprises (a) receiving with an interface component at least one tasking message descriptive of at least one robot task. The at least one tasking message may be partly or fully descriptive of the at least one robot task. That is, a tasking message may be fully descriptive of a robot task or may be fully descriptive of a part of the robot task. In the latter example, the tasking message can be partly descriptive of the robot task.

The method further comprises (b) executing with the interface component an interface module to generate based on the at least one tasking message at least one job descriptive of the at least one robot task, wherein each of the at least one job is an instance of a job data structure. That is, the interface component can transform the at least one tasking message to jobs comprising a uniform structure, referred herein as a job data structure. This can allow all modules and components downstream of the interface component to be agnostic of the data structure used to implement the at least one tasking message.

The method further comprises (c) receiving with an executor component the at least one job and (d) executing with the executor component an executor module to cause the robot to perform the at least one robot task based on the at least one job. Thus, the robot can perform robot tasks as requested via the tasking messages. The executor component can be controllable based on instances of the job data structure. Simply put, the executor component can be configured to read and process instances of the job data structure. The interface module alleviates the need to configure the executor module to read and process instances of a plurality of data structures. As a result, a more accurate and efficient operation of the mobile robot may be achieved.

Above, (a), (b), (c) and (d) are associated to respective steps or acts of the method. In the following, (a), (b), (c) and (d) may be used to refer to the respective steps, the wording of which can be omitted for the sake of brevity.

It will be understood that the method for tasking a robot can be a method for controlling the robot. That is, the robot can be tasked according to the described method, and thus, its operation can be controlled accordingly.

The present invention can thus make the robot, the executor component and/or other components or modules utilized to control the robot agnostic of the data structure used to implement the at least one tasking message. It can be sufficient for the robot, for the executor component and/or for the other components or modules utilized to control the robot to be able to read and process instances of a job data structure.

Thus, the robot can be tasked from different entities. If a new tasking entity may need to be added, it may be sufficient to only modify the interface module, instead of having to modify the robot, the executor component and/or other components or modules utilized to control the robot.

Advantages of the present technology will now be illustrated with an example. The robot can be configured to accomplish the following robot task: navigate to object, pick-up the object. The first task may require an object location and optionally an object definition. The second task may require an object definition. The executor module can be configured to select which task the robot needs to perform next.

There can be different ways that a tasking entity can provide tasks for the robot. For example, a first way may be via the tasking message: "Navigate to location X and pick object Y". A second way may be via the tasking messages "Navigate to location X" "Pick object Y". A third way may be via a tasking message using different semantics, e.g., "Object: Y. Position: X". As it can be noticed, these tasking messages differ from each other.

Without the interface module, the executor module would require a separate function (e.g., a separate behavior tree) for each different type of tasking message - so that it can be able to read and process each tasking message. Thus, the executor module would be complex, require a large memory and inefficient to modify or debug. For example, the same modification would need to be replicated in each behavior tree.

These disadvantages can be alleviated by the present invention which provides, inter alia, an interface module. Thus, e.g., the executor module can comprise a single behavior tree for reading and processing instances of the job data structure, i.e., jobs. Thus, the executor module may be simpler, require a less memory and can be more efficient to modify or debug.

The receiving in (a) can comprise receiving with an interface component a first tasking message descriptive of a first robot task and a second tasking message descriptive of a second robot task, wherein the first tasking message and the second tasking message can comprise instances of different data structures and wherein the executing in (b) can comprise executing with the interface component an interface module to generate a first job descriptive of the first robot task and a second job descriptive of the second robot task based on the first and second tasking message, respectively. Thus, tasking messages that can be instances of data structures not recognizable by the executor component can be transformed into instances of the job data structure and therefore recognizable by the executor component. Furthermore, different tasking entities that may utilize different data structures for implementing tasking messages can be used to task the mobile robot, without the need of modifying the executor component and/or the executor module.

For example, a first tasking message can be "Nav to X" and a second tasking message can be "Next position: X". The interface component executing the interface module can be transformed both of these tasking message into respective instances of the job data structures, e.g., "Navigate to X".

Thus, the interface component can generate uniformly structured jobs that can be read and processed by the executor component.

The receiving in (a) can comprise receiving a plurality of tasking messages and the executing in (b) can comprise generating one job based on the plurality of tasking messages.

That is, the executing in (b) can comprise consolidating the plurality of tasking messages into one job.

Said plurality of tasking messages can be descriptive of one robot task and wherein said one job can be descriptive of said robot task.

This can allow tasking entities using a different granularity, e.g., a more granular definition, of robot tasks to be able to task the mobile robot. For example, the tasking messages "Activate gripper", "Open gripper", "Grip object Y", "Close Gripper" can be transformed into the job "Pick Y".

The receiving in (a) can comprise receiving one tasking message and the executing in (b) can comprise generating a plurality of jobs job based on the plurality of tasking messages.

That is, the executing in (b) can comprise disintegrating one tasking message into a plurality of jobs.

Said one tasking message can be descriptive of a plurality of robot tasks and wherein said each one of said plurality of jobs can be descriptive of a respective one of said plurality of robot tasks.

This can allow tasking entities using a different granularity, e.g., a less granular definition, of robot tasks to be able to task the mobile robot. For example, the tasking message "Pick object Y on location X" can be transformed into the jobs "Navigate to X" and "Pick Y".

The interface component and the executor component can be hardware components, whereas the interface module and the executor module can refer to software components. That is, the interface component and the executor component can comprise at least one processor, whereas the interface module and the executor module can comprise at least one computer instruction.

The interface component and the executor component can be part of a data processing system.

The interface component and the executor component can be the same component. For example, a processor may act both as an interface component and as an executor component. That is, the processor may be configured to execute the interface module and the executor module.

The method can comprise the interface component receiving the at least one tasking message from at least one tasking entity. The tasking entity may refer to any entity wherein robot tasks may originate.

Each of the at least one tasking entity can be configured to generate tasking messages descriptive of robot tasks. That is, the tasking entities can provide tasks to the robot using tasking messages.

At least one of the at least one tasking entity can be a robot coordination system configured to distribute a plurality of robot tasks to a plurality of robots comprising said robot.

At least one of the at least one tasking entity can be a user interaction device configure to allow a user to provide robot tasks to the robot.

Each of the at least one tasking entity can be external to the robot. Using external tasking entities can be particularly facilitated by the interface module, which can make the robot agnostic of the way that an external tasking entity can provide tasks to the robot.

The method can comprise the interface component receiving the first tasking message from a first tasking entity and the second tasking message from a second tasking entity. That is, different tasking entities may be used to task the mobile robot. Again, this can be particularly facilitated by the interface module.

The first tasking entity can be configured to generate tasking messages according to a first data structure and the second tasking entity can be configured to generate tasking messages according to a second data structure, wherein the first and the second data structures can be different. The interface module thus allows the robot to be tasked by multiple tasking units, which can use different data structures to generate tasking messages.

The first tasking entity can generate the first tasking message and wherein the second tasking entity can generate the second tasking message.

The method can comprise the interface component receiving the at least one tasking message via at least one tasking channel.

Each tasking channel can be an electronic data communication channel.

The method can comprise the at least one tasking channel utilizing a machine-to-machine network protocol during communication of the first tasking message and/or second tasking message. Examples can include Message Queuing Telemetry Transport (MQTT), VDA 5050 and/or a proprietary protocol.

The method can comprise the at least one tasking channel utilizing a publish-subscribe messaging transport protocol during communication of the first tasking message and/or second tasking message. For example, the interface module can be a subscriber and the tasking entities can be publishers.

The method can comprise the interface component receiving the first tasking message via a first tasking channel and receiving the second tasking message via a second tasking channel. That is, the interface component may utilize multiple tasking channels for receiving tasking messages. This can be advantageous as it can allow the robot to be tasked by tasking entities that may only communicate tasks via particular communication channels.

It will be understood that the first and the second tasking channel can comprise any of the features discussed above in relation to the at least one tasking channel.

The first tasking channel can connect the interface component with the first tasking entity and the wherein the second tasking channel can connect the interface component with the second tasking entity.

The interface module can comprise computer instructions which when executed by the interface component causes the interface to transform an instance of a data structure selected from a set of supported data structures to an instance of the job data structure. Computer instructions can herein refer to machine readable instructions. A set of supported data structures can comprise a plurality of data structures that can be read and processed by the interface module. The functionality of the interface module can be enhanced by enlarging the set of supported data structures.

The interface module can comprise decoding modules, wherein each decoding module can be configured to transform an instance of a respective data structure to an instance of the job data structure. That is, the interface module can comprise a modular structure. This can facilitate the process of adapting the interface module to changes in the data structure and/or it can facilitate enhancing the functionality of the interface module. For example, if a data structure is changed, it may only be required to adapt the respective decoding module. Moreover, the interface module can be easily enhanced by adding further decoding modules to therefore extend the set of supported data structures.

For each decoding module, the respective data structure can be part of the set of supported data structures of the interface module.

One of the decoding modules can be a first decoding module generating based on the first tasking message the first job and wherein another one of the decoding modules can be a second decoding module generating based on the second tasking message the second job.

The job data structure can comprise a plurality of job data elements. The job data elements may be configured to store data about the job. In other words, job data can be contained by job data elements, wherein the job data elements can be structured to form a job data structure. Thus, the job data structure can comprise job data in a structured manner. This can allow a deterministic access of the job data.

One of the job data elements can be indicative of a job identifier. The job identifier can be used to identify, preferably uniquely identify, a job. This can facilitate tracking and/or logging the progress of a job.

One of the job data elements can be indicative of a job type. This can facilitate categorizing the job. In addition, knowing the job type of a job can facilitate its processing.

One of the job data elements can be indicative of job parameters. The job parameters can specify details about the job. Job parameters may, for example, include: location, object definition(s), robot pose and/or target battery charger.

Different job types can comprise different job parameters. Thus, the jobs can be customized to the particular job type to better describe the respective robot task. For example, a job relating to navigation may include a job parameter indicative of the target location. Similarly, a job relating to picking up an object may comprise one or more job parameters indicative of the object.

One of the job data elements can be indicative of a job priority. This can facilitate determining which robot task to perform next.

One of the job data elements can be indicative of a job state. This can facilitate tracking a progress of the job.

The job data structure can be a polymorphic data structure. That is, the job data structure can be implemented using polymorphism. This can be particularly advantageous as it can allow defining different job types.

The job data structure can comprise a basic definition defining basic data elements and a type definition defining type-specific data elements, wherein the type definition inherits the basic data elements from the basic definition.

Each job can be an instance of the type definition.

The executor module can be configured to process instances of the job data structure. Thus, all the processes of the executor module can be operate using a uniform definition of the jobs.

The executor module can be configured to recognize the data elements of the job data structure.

Each job can be associated with a respective job state machine, wherein the job state machine can comprise a plurality of job states and transition links between said job states, wherein the transition links between said states can be associated with respective transition conditions. The job state machine can facilitate tracking and logging the progress of individual jobs and their respective robot tasks. Additionally, the job state machine can facilitate planning the robot tasks that the robot needs to perform, e.g., which job to execute next.

The transition links can be directed links. That is, the job state machine can define via the transition links how to transition from one state to the other.

Each job state machine can comprise at least one initial job state and at least one terminal job state, wherein each initial job state can comprise no incoming transitions links and wherein each terminal job state can comprise no outgoing transition links. The job state machine can generally transition from the initial job states towards the terminal states.

Each job state machine can comprise intermediate job states comprising at least one incoming transition link and at least one outgoing transition link. The intermediate job states can be used to track the state of the job between its initial state(s) to its terminal state(s).

The method can comprise the executor module checking the transition conditions and based thereon performing corresponding transitions between the job states of each state machine according to the corresponding transition links. That is, the executor module can update the job state of each job.

The method can comprise the interface component, upon generating each job, setting their respective job states to an initial job state.

It will be understood that throughout the description the term "each job" may can include the first job and the second job.

Each job state machine can comprise a created state indicating that the respective job is created.

The created state can be an initial state.

Each job state machine can comprise a queued state indicating that the respective job can be input in a job queue. The job queue can be used to store jobs that need to executed.

The queued state can be an initial state or an intermediate state. For example, some jobs can be directly upon creation put into the job queue and thus on the queued state. Some other jobs can be transitioned from a created state to a queued state, e.g., in response to an enqueue instruction.

Each job state machine can comprise an active state indicating that the robot task corresponding to the respective job is being executed.

Each job state machine can comprise a completed state indicating that the robot task corresponding to the respective job can be completed. When a job executes successfully its states can be set to completed.

The completed state can be a terminal state.

The active state can be an intermediate state between the queued state and the completed state.

Each job state machine can comprise a problem state indicating that the robot task corresponding to the respective job has previously failed at least once.

Each job state machine can comprise an aborted state indicating that the robot task corresponding to the respective job can be aborted. A job may transition into the aborted state as a result of a premature end because of a problem of fault. The job may transition into the aborted state automatically by the automatic operation of the robot, an external command from a user interface and/or if it is rejected prior to being sent to the robot.

Alternatively, each job state machine may comprise a robot aborted state, cancel state and reject state. The first can be caused by the automatic operation of the robot, the second by an external command from user interface (e.g., a customer interface or web interface) and the third is not even sent to the robot as it cannot be executed. In the following, the term "aborted state" may jointly refer to the robot aborted state, cancel state and reject state.

The aborted state can be a terminal state.

A successful completion of a robot task can comprise its respective job transitioning from the queued state to the active state and then from the active state to the completed state.

One of the transition conditions can be an external stimulus. An external stimulus can comprise an instruction received from a device external to the mobile robot.

One of the transition conditions can be an abort condition which upon fulfillment causes the respective job to transition from any state of the job state machine to the abort state.

One of the transition conditions can be an undo condition which upon fulfillment causes the respective job to transition from any of the job states to the abort state.

One of the transition conditions can be an enqueue condition which upon fulfillment causes the respective job to transition to the queued state.

One of the transition conditions can be a retry condition which upon fulfillment causes the respective job to transition from a problem state to the queued state.

One of the transition conditions can be a start condition which upon fulfillment causes the respective job to transition to the active state.

One of the transition conditions can be a complete condition which upon fulfillment causes the respective job to transition to the completed state.

The method can comprise the executor component checking whether one or more of the transition conditions can be fulfilled and upon fulfillment performing the corresponding transition(s) of the corresponding jobs.

Each job can be associated with a respective job behavior tree.

For each job, the respective job behavior tree can comprise a plurality of nodes, wherein each node can comprise computer instructions and wherein some of the nodes when executed cause the robot to perform the robot task corresponding to the job.

For each job, the respective job behavior tree can organize hierarchically a set of robot actions that the robot is configured to perform to fulfil the respective robot task corresponding to the job.

It will be understood that, given that each job can be descriptive of a respective robot task and that each job can be associated with a respective job behavior tree, it can thus follow that each job behavior tree can be related to a respective robot task.

Jobs of different job types can be associated with different instances of different job behavior trees. For example, a pick-up job can comprise a job behavior tree comprising actions needed to pick-up an object while a navigation job can comprise

Jobs of the same job type can be associated with different instances of the same job behavior tree.

Each job behavior tree can comprise a job decorator node configured to log job data. This can facilitate logging the progress of jobs. Moreover, job decorator nodes may also provide more insight on how a job executes.

It will be understood that the job decorator node can be in the singular or in the plural.

The job data can comprise a job label, wherein the job label can be indicative of the respective robot task.

The job data can comprise job timing data, wherein the job timing data can be indicative of a starting time, ending time and/or duration of the respective robot task.

The job data can comprise job sensor data, wherein the job sensor data can comprise data collected by at least one sensor of the robot during execution of the respective robot task.

Each job behavior tree can comprise a plurality of phase subtrees, wherein each phase subtree can comprise nodes which when executed cause the robot to perform a robot subtask of the respective robot task. That is, the job behavior trees can be implemented in a modular manner. Such a modular approach can be advantageous as it can facilitate adapting the job behavior tree to changes that may be performed in the robot. For example, if a gripper of the robot is changed, only a gripping subtree of the pick-up behavior tree may need to be changed, instead of the entire job pick-up behavior tree.

Each phase subtree can comprise a phase decorator node configured to log phase data. This can be advantageous as it can allow tracking the progress of robot subtasks. Therefore, more detailed insights can be obtained on the progress of a job.

It will be understood that the phase decorator node can be in the singular or in the plural.

The phase data can comprise a phase label, wherein the phase label can be indicative of the respective robot subtask.

It will be understood that, given that each phase subtree can relate to a respective robot subtask and given that for each phase subtree respective phase data can be logged by the respective phase decorator node, it can thus follow that each one of the phase data can be related to a respective robot subtask.

The phase data can comprise phase timing data, wherein the phase timing data can be indicative of a starting time, ending time and/or duration of the respective robot subtask.

The phase data can comprise phase sensor data, wherein the phase sensor data can comprise data collected by at least one sensor of the robot during execution of the respective robot subtask.

The phase subtrees can be defined within the job behavior tree by the respective phase decorator node.

The job behavior tree can comprise a plurality of phase decorator nodes, wherein each phase decorator node defines a respective phase subtree.

The method can comprise for each job storing the respective job state in a memory system.

The method can comprise for each job storing the respective job data in a memory system.

The method can comprise storing the phase data in the memory system, such that the phase data can be associated with the respective job.

The method can comprise using the memory system to analyze execution of a robot task.

The method can comprise using the memory system to analyze execution of a robot subtask.

The method can comprise using the memory system to resume operation of the robot in case of an interruption.

The method can comprise the interface module and the executor module communicating via a job communication channel.

The method can comprise the interface module providing each job to the executor module via the job communication channel.

The method can comprise the interface module providing to the executor module via the job communication channel, for at least one job, a cancel command instructing the executor module to cancel execution of the job.

The method can comprise the interface module providing to the executor module via the job communication channel, a cancel-all command instructing the executor module to cancel execution of all the jobs.

The method can comprise the executor module providing to the interface module via the job communication channel, for each job, respective state data indicative of the job state.

The method can comprise the executor module providing to the interface module via the job communication channel, for each job, respective result data indicative of whether the respective robot task can be completed successfully.

The method can comprise the executor module providing to the interface module via the job communication channel, for each job, respective feedback data indicative of predefined data relevant to the respective robot task.

Said predefined data can comprise job data.

Said predefined data can comprise phase data.

The method can comprise the executor module providing to the interface module via the job communication channel status data indicative of a status of the executor module, the status being selected from a predefined list of statuses.

The job communication channel can utilize a client-server communication protocol, wherein the interface module implements the client and the executor module implements the server.

The job communication channel can utilize a robot operating system action comprising an action client and an action server, wherein the interface module implements the action client and the executor module implements the action server.

The method can comprise the interface module sending a command to the executor module via an instant action communication channel, wherein the command can be selected from a predetermined list of commands.

The interface module and the executor module can be configured to communicate in parallel via the job communication channel and the instant action communication channel.

The job communication channel and the instant action communication channel can be independent from each other.

The method can comprise the executor module: executing the command in parallel to the robot task; or interrupting execution of a robot task upon receiving a command and executing the command.

The instant action communication channel can be a unidirectional channel.

The method can comprise the executor module sending a command state to the interface module via a state communication channel, wherein the command state can be selected from a predetermined list of command states.

The predetermined list of command states can comprise command executed, command postponed and command rejected.

The interface module and the executor module can be configured to communicate in parallel via the state communication channel and the instant action communication channel.

The executor module can comprise an executor behavior tree.

The method can comprise the executor component using the executor behavior tree to determine which robot task to perform.

The executor behavior tree can be configured to call the respective job behavior tree of each job.

Each job behavior tree can be a subtree of the executor behavior tree.

Each behavior tree can comprise nodes including a root node and leaf nodes, wherein each node can comprise computer instructions.

The behavior tree can comprise intermediate nodes and wherein at least some of the leaf nodes can be can connected with the root node via the intermediate nodes.

Each node can be configured to return a node state when executed, wherein the node state can be selected from a list of node states.

The nodes can be can connected with directed edges.

The root node has no incoming edges and one outgoing edge and the leaf nodes have no outgoing edges and one incoming edge

The intermediate nodes can comprise one incoming edge and one or more outgoing edges.

Each of the directed edges can connect a respective pair of the nodes by originating from one of the nodes, which can be defined as a parent node in the pair, towards the other node in the pair, which can be defined as a child node in the pair.

Each child node can be configured to return its node state to its parent node.

The node state of each parent node depends on the node state of at least one of its child nodes.

Executing the behavior tree can comprise each parent node calling one or more of its child nodes.

Executing the behavior tree for one execution cycle can comprise calling the root node once.

The list of node states can comprise: success, running and failure.

The list of node states can comprise an initialized state, wherein the state initialized indicates that a node has been initialized and can be ready for execution.

The list of node states can comprise a suspended state, wherein the state suspended indicates that a node has been paused.

The list of node states can comprise an invalid state, wherein the state invalid indicates that a node has been created, but can be not ready for execution yet.

The list of node states can comprise an aborted state, wherein the state aborted indicates that a node itself has stopped execution of this node.

The list of node states can comprise a preempted state, wherein the state preempted indicates that a user or a behavior tree executive has stopped the execution of the node.

The robot can be an autonomous robot, such as an autonomous forklift.

The robot can include a mobile base and/or a manipulator.

The robot can be an autonomously driving robot.

The robot can be adapted to pick up objects.

The robot can include a sensor and the method can include sensing information by means of the sensor and effecting the robot to respond to the information.

The robot can comprise a drive unit configured to move the robot.

The robot can comprise a pick-up unit configured to pick up at least one object.

The pick-up unit can comprise at least one gripper.

The robot can comprise a shelf unit configured to store at least one object.

The robot can be an autonomous vehicle.

The robot can comprise a battery.

One of the at least one robot task can comprise a task for the robot to charge its batteries.

One of the at least one robot task can comprise a task for the robot to navigate.

One of the at least one robot task can comprise a task for the robot to pick-up an object.

One of the at least one robot task can comprise a task for the robot to put down an object.

One of the at least one robot task can comprise a task for the robot to detect an object.

In a further aspect, the present invention relates to a system comprising an interface component and an executor component, wherein the system is configured to carry out the method according to the present invention.

The interface component and the executor component can be part of a data processing system.

The interface component and the executor component can be the same component.

The system further can comprise a memory system, such as, a database.

The system further can comprise at least one tasking entity.

The system further can comprise a robot.

The robot can include a mobile base and/or a manipulator.

The robot can be an autonomously driving robot, such as an autonomous forklift.

The robot can be adapted to pick up objects.

The robot can include a sensor and the method can include sensing information by means of the sensor and effecting the robot to respond to the information.

The robot can comprise a drive unit configured to move the robot.

The robot can comprise a pick-up unit configured to pick up at least one object.

The pick-up unit can comprise at least one gripper.

The robot can comprise a shelf unit configured to store at least one object.

In a further aspect, the present invention relates to a computer program product comprising instructions which when executed by a system comprising an interface component and an executor component and further optionally a robot, causes the system to carry out the method according to the present invention.

The present invention is also defined by the following numbered embodiments.

Below, method embodiments will be discussed. These embodiments are abbreviated by the letter "M" followed by a number. When reference is herein made to method embodiments, these embodiments are meant.

M1. A method for tasking a robot (100), the method comprising
(a) receiving with an interface component (25) at least one tasking message (62) descriptive of at least one robot task;
(b) executing with the interface component (25) an interface module (20) to generate based on the at least one tasking message (62) at least one job (52) descriptive of the at least one robot task, wherein each of the at least one job (52) is an instance of a job data structure (50);
(c) receiving with an executor component (30) the at least one job (52); and
(d) executing with the executor component (30) an executor module (30) to cause the robot (100) to perform the at least one robot task based on the at least one job (52).

It will be understood that the method for tasking a robot is a method for controlling the robot. That is, the robot is tasked according to the described method, and thus, its operation is controlled accordingly.

M2. The method according to the preceding embodiment, wherein the receiving in (a) comprises receiving with an interface component (25) a first tasking message (62a) descriptive of a first robot task and a second tasking message (62b) descriptive of a second robot task, wherein the first tasking message (62a) and the second tasking message (62b) comprise instances of different data structures and
wherein the executing in (b) comprises executing with the interface component (25) an interface module (20) to generate a first job (52a) descriptive of the first robot task and a second job (52b) descriptive of the second robot task based on the first and second tasking message (62b), respectively.

M3. The method according to any of the preceding embodiments, wherein the receiving in (a) comprises receiving a plurality of tasking messages (62) and the executing in (b) comprises generating one job (52) based on the plurality of tasking messages (62).

That is, the executing in (b) can comprise consolidating the plurality of tasking messages (62) into one job (52).

M4. The method according to the preceding embodiment, wherein said plurality of tasking messages is descriptive of one robot task and wherein said one job (52) is descriptive of said robot task.

M5. The method according to any of the preceding embodiments, wherein the receiving in (a) comprises receiving one tasking message (62) and the executing in (b) comprises generating a plurality of jobs job (52) based on the plurality of tasking messages.

That is, the executing in (b) can comprise disintegrating one tasking message (62) into a plurality of jobs (52).

M6. The method according to the preceding embodiment, wherein said one tasking message (62) is descriptive of a plurality of robot tasks and wherein said each one of said plurality of jobs (52) is descriptive of a respective one of said plurality of robot tasks.

M7. The method according to any of the preceding embodiments, wherein the interface component (25) and the executor component (30) are part of a data processing system.

M8. The method according to any of the preceding embodiments, wherein the interface component (25) and the executor component (30) are the same component.

M9. The method according to any of the preceding embodiments, wherein the method comprises the interface component (25) receiving the at least one tasking message (62) from at least one tasking entity (10).

M10. The method according to the preceding embodiment, wherein each of the at least one tasking entity (10) is configured to generate tasking messages (62) descriptive of robot tasks.

M11. The method according to any of the 2 preceding embodiments, wherein at least one of the at least one tasking entity (10) is a robot coordination system configured to distribute a plurality of robot tasks to a plurality of robots comprising said robot (100).

M12. The method according to any of the 3 preceding embodiments, wherein at least one of the at least one tasking entity (10) is a user interaction device configure to allow a user to provide robot tasks to the robot (100).

M13. The method according to any of the 4 preceding embodiments, wherein each of the at least one tasking entity (10) is external to the robot (100).

M14. The method according to any of the preceding embodiments and with the features of embodiment M2, wherein the method comprises the interface component (25) receiving the first tasking message (62a) from a first tasking entity (10a) and the second tasking message (62b) from a second tasking entity (10b).

M15. The method according to the preceding embodiment, wherein the first tasking entity (10a) is configured to generate tasking messages (62) according to a first data structure and the second tasking entity (10b) is configured to generate tasking messages (62) according to a second data structure, wherein the first and the second data structures are different.

M16. The method according to any of the 2 preceding embodiments, wherein the first tasking entity (10a) generates the first tasking message (62a) and wherein the second tasking entity (10b) generates the second tasking message (62b).

M17. The method according to any of the preceding embodiments, wherein the method comprises the interface component (25) receiving the at least one tasking message (62) via at least one tasking channel (82).

M18. The method according to the preceding embodiment, wherein each tasking channel (82) is an electronic data communication channel.

M19. The method according to any of the 2 preceding embodiments, wherein the method comprises the at least one tasking channel (82) utilizing a machine-to-machine network protocol during communication of the first tasking message (62a) and/or second tasking message (62b).

M20. The method according to any of the 3 preceding embodiments, wherein the method comprises the at least one tasking channel (82) utilizing a publish-subscribe messaging transport protocol during communication of the first tasking message (62a) and/or second tasking message (62b).

M21. The method according to any of the 4 preceding embodiments and with the features of embodiment M2, wherein the method comprises the interface component (25) receiving the first tasking message (62a) via a first tasking channel (82a) and receiving the second tasking message (62b) via a second tasking channel (82b).

It will be understood that the first and the second tasking channel (82) can comprise any of the features discussed above in relation to the at least one tasking channel (82).

M22. The method according to the preceding embodiment and with the features of embodiment M14, wherein the first tasking channel (82a) connects the interface component (25) with the first tasking entity (10a) and the wherein the second tasking channel (82b) connects the interface component (25) with the second tasking entity (10b).

M23. The method according to any of the preceding embodiments, wherein the interface module (20) comprises computer instructions which when executed by the interface component (25) causes the interface to transform an instance of a data structure selected from a set of supported data structures to an instance of the job data structure (50).

M24. The method according to any of the preceding embodiments, wherein the interface module (20) comprises decoding modules (22), wherein each decoding module (22) is configured to transform an instance of a respective data structure to an instance of the job data structure (50).

M25. The method according to the 2 preceding embodiments, wherein for each decoding module (22), the respective data structure is part of the set of supported data structures of the interface module (20).

M26. The method according to any of the 2 preceding embodiments and with the features of embodiment M2, wherein one of the decoding modules (22) is a first decoding module (22a) generating based on the first tasking message (62a) the first job (52a) and wherein another one of the decoding modules (22) is a second decoding module (22b) generating based on the second tasking message (62b) the second job (52b).

M27. The method according to any of the preceding embodiments, wherein the job data structure (50) comprises a plurality of job data elements (57, 59).

M28. The method according to the preceding embodiment, wherein one of the job data elements (57, 59) is indicative of a job identifier.

M29. The method according to any of the 2 preceding embodiments, wherein one of the job data elements (57, 59) is indicative of a job type.

M30. The method according to any of the 3 preceding embodiments, wherein one of the job data elements (57, 59) is indicative of job parameters.

M31. The method according to the 2 preceding embodiments, wherein different job types comprise different job parameters.

M32. The method according to any of the 5 preceding embodiments, wherein one of the job data elements (57, 59) is indicative of a job priority.

M33. The method according to any of the 6 preceding embodiments, wherein one of the job data elements (57, 59) is indicative of a job state (91).

M34. The method according to any of the preceding embodiments, wherein the job data structure (50) is a polymorphic data structure.

M35. The method according to any of the preceding embodiments, wherein the job data structure (50) comprises a basic definition (51) defining basic data elements (57) and a type definition (53) defining type-specific data elements (59), wherein the type definition (53) inherits the basic data elements (57) from the basic definition (51).

M36. The method according to the preceding embodiment, wherein each job (52) is an instance of the type definition (53).

M37. The method according to any of the preceding embodiments, wherein the executor module (30) is configured to process instances of the job data structure (50).

M38. The method according to any of the preceding embodiments and with the features of embodiment M27, wherein the executor module (30) is configured to recognize the job data elements (57, 59) of the job data structure (50).

M39. The method according to any of the preceding embodiments, wherein each job (52) is associated with a respective job state machine (90), wherein the job state machine (90) comprises a plurality of job states (91) and transition links (95) between said job states (91), wherein the transition links (95) between said states are associated with respective transition conditions (93).

M40. The method according to the preceding embodiment, wherein the transition links (95) are directed links.

M41. The method according to any of the 2 preceding embodiments, wherein each job state machine (90) comprises at least one initial job state (91) and at least one terminal job state (91), wherein each initial job state (91) comprises no incoming transitions links and wherein each terminal job state (91) comprises no outgoing transition links (95).

M42. The method according to any of the 3 preceding embodiments, wherein each job state machine (90) comprises intermediate job states (91) comprising at least one incoming transition link and at least one outgoing transition link.

M43. The method according to any of the 4 preceding embodiments, wherein the method comprises the executor module (30) checking the transition conditions (93) and based thereon performing corresponding transitions between the job states (91) of each state machine according to the corresponding transition links (95).

M44. The method according to any of the 5 preceding embodiments and with the features of embodiment M41, wherein the method comprises the interface component (25), upon generating each job (52), setting their respective job states (91) to an initial job state (91).

It will be understood that throughout the description the term "each job (52)" may include the first job (52a) and the second job (52b).

M45. The method according to any of the 6 preceding embodiments, wherein each job state machine (90) comprises a created state (91a) indicating that the respective job (52) is created.

M46. The method according to the preceding embodiment, wherein the created state (91a) is an initial state.

M47. The method according to any of the 8 preceding embodiments, wherein each job state machine (90) comprises a queued state (91b) indicating that the respective job (52) is input in a job (52) queue.

M48. The method according to the preceding embodiment and with the features of embodiment M41 or M42, wherein the queued state (91b) is an initial state or an intermediate state.

M49. The method according to any of the 10 preceding embodiments, wherein each job state machine (90) comprises an active state (91c) indicating that the robot task corresponding to the respective job (52) is being executed.

M50. The method according to any of the 11 preceding embodiments, wherein each job state machine (90) comprises a completed state (91d) indicating that the robot task corresponding to the respective job (52) is completed.

M51. The method according to the preceding embodiment, wherein the completed state (91d) is a terminal state.

M52. The method according to any of the 13 preceding embodiments and with the features of embodiments M47, M49 and M50, wherein the active state (91c) is an intermediate state between the queued state (91b) and the completed state (91d).

M53. The method according to any of the 14 preceding embodiments, wherein each job state machine (90) comprises a problem state (91f) indicating that the robot task corresponding to the respective job (52) has previously failed at least once.

M54. The method according to any of the 15 preceding embodiments, wherein each job state machine (90) comprises an aborted state indicating that the robot task corresponding to the respective job (52) is aborted.

M55. The method according to the preceding embodiment and with the features of embodiment M41, wherein the aborted state is a terminal job state (91).

M56. The method according to any of the 17 preceding embodiments and with the features of embodiments M47, M49 and M50, wherein a successful completion of a robot task comprises its respective job (52) transitioning from the queued state (91b) to the active state (91c) and then from the active state (91c) to the completed state (91d).

M57. The method according to any of the 18 preceding embodiments, wherein one of the transition conditions (93) is an external stimulus.

M58. The method according to any of the 19 preceding embodiments and with the features of embodiment M54, wherein one of the transition conditions (93) is an abort condition (93b) which upon fulfillment causes the respective job (52) to transition from any state of the job state machine (90) to the abort state (91e).

M59. The method according to any of the 20 preceding embodiments and with the features of embodiment M54, wherein one of the transition conditions (93) is an undo condition (93a) which upon fulfillment causes the respective job (52) to transition from any of the job states (91) to the abort state (91e).

M60. The method according to any of the 21 preceding embodiments and with the features of embodiment M47, wherein one of the transition conditions (93) is an enqueue condition (93d) which upon fulfillment causes the respective job (52) to transition to the queued state (91b).

M61. The method according to any of the 22 preceding embodiments and with the features of embodiments M47 and M53, wherein one of the transition conditions (93) is a retry condition (93e) which upon fulfillment causes the respective job (52) to transition from a problem state (91f) to the queued state (91b).

M62. The method according to any of the 23 preceding embodiments and with the features of embodiment M49, wherein one of the transition conditions (93) is a start condition (93f) which upon fulfillment causes the respective job (52) to transition to the active state (91c).

M63. The method according to any of the 24 preceding embodiments and with the features of embodiment M50, wherein one of the transition conditions (93) is a complete condition (93c) which upon fulfillment causes the respective job (52) to transition to the completed state (91d).

M64. The method according to any of the 25 preceding embodiments, wherein the method comprises the executor component (30) checking whether one or more of the transition conditions (93) is fulfilled and upon fulfillment performing the corresponding transition(s) of the corresponding jobs (52).

M65. The method according to any of the preceding embodiments, wherein each job (52) is associated with a respective job behavior tree (40).

M66. The method according to the preceding embodiment, wherein, for each job (52), the respective job behavior tree (40) comprises a plurality of nodes, wherein each node comprises computer instructions and wherein some of the nodes when executed cause the robot (100) to perform the robot task corresponding to the job (52).

M67. The method according to any of the 2 preceding embodiments, wherein, for each job (52), the respective job behavior tree (40) organizes hierarchically a set of robot actions that the robot (100) is configured to perform to fulfil the respective robot task corresponding to the job (52).

It will be understood that, given that each job (52) is descriptive of a respective robot task and that each job (52) can be associated with a respective job behavior tree (40), it can thus follow that each job behavior tree (40) is related to a respective robot task.

M68. The method according to any of the 3 preceding embodiments, wherein jobs (52) of different job types are associated with different instances of different job behavior trees (40).

M69. The method according to any of the 4 preceding embodiments, wherein jobs (52) of the same job type are associated with different instances of the same job behavior tree (40).

M70. The method according to any of the 5 preceding embodiments, wherein each job behavior tree (40) comprises a job decorator node configured to log job data (56).

It will be understood that the job decorator node (550) can be in the singular or in the plural.

M71. The method according to the preceding embodiment, wherein the job data (56) comprise a job label, wherein the job label is indicative of the respective robot task.

M72. The method according to any of the 2 preceding embodiments, wherein the job data (56) comprise job timing data, wherein the job timing data is indicative of a starting time, ending time and/or duration of the respective robot task.

M73. The method according to any of the 3 preceding embodiments, wherein the job data (56) comprise job sensor data, wherein the job sensor data comprise data collected by at least one sensor of the robot (100) during execution of the respective robot task.

M74. The method according to any of the preceding embodiments and with the features of embodiment M65, wherein each job behavior tree (40) comprises a plurality of phase subtrees, wherein each phase subtree comprises nodes which when executed cause the robot (100) to perform a robot subtask of the respective robot task.

M75. The method according to the preceding embodiment, wherein each phase subtree comprises a phase decorator node (450) configured to log phase data.

It will be understood that the phase decorator node (450) can be in the singular or in the plural.

M76. The method according to the preceding embodiment, wherein the phase data comprise a phase label, wherein the phase label is indicative of the respective robot subtask.

It will be understood that, given that each phase subtree can relate to a respective robot subtask and given that for each phase subtree respective phase data can be logged by the respective phase decorator node (450), it can thus follow that each one of the phase data is related to a respective robot subtask.

M77. The method according to any of the 2 preceding embodiments, wherein the phase data comprise phase timing data, wherein the phase timing data is indicative of a starting time, ending time and/or duration of the respective robot subtask.

M78. The method according to any of the 3 preceding embodiments, wherein the phase data comprise phase sensor data, wherein the phase sensor data comprise data collected by at least one sensor of the robot (100) during execution of the respective robot subtask.

M79. The method according to any of the 4 preceding embodiments, wherein the phase subtrees are defined within the job behavior tree (40) by the respective phase decorator node (450).

M80. The method according to any of the 5 preceding embodiments, wherein the job behavior tree (40) comprises a plurality of phase decorator nodes (450), wherein each phase decorator node (450) defines a respective phase subtree.

M81. The method according to any of the preceding embodiments and with the features of embodiment M39, wherein the method comprises for each job (52) storing the respective job state (91) in a memory system (37).

M82. The method according to any of the preceding embodiments and with the features of embodiment M70, wherein the method comprises for each job (52) storing the respective job data (56) in a memory system (37).

M83. The method according to any of the preceding embodiments and with the features of embodiment M75, wherein the method comprises storing the phase data in the memory system (37), such that the phase data are associated with the respective job (52).

M84. The method according to any of the 3 preceding embodiments, wherein the method comprises using the memory system (37) to analyze execution of a robot task.

M85. The method according to any of the 4 preceding embodiments, wherein the method comprises using the memory system (37) to analyze execution of a robot subtask.

M86. The method according to any of the 5 preceding embodiments, wherein the method comprises using the memory system (37) to resume operation of the robot (100) in case of an interruption.

M87. The method according to any of the preceding embodiments, wherein the method comprises the interface module (20) and the executor module (30) communicating via a job communication channel (72).

M88. The method according to the preceding embodiment, wherein the method comprises the interface module (20) providing each job (52) to the executor module (30) via the job communication channel (72).

M89. The method according to any of the 2 preceding embodiments, wherein the method comprises the interface module (20) providing to the executor module (30) via the job communication channel (72), for at least one job (52), a cancel command instructing the executor module (30) to cancel execution of the job (52).

M90. The method according to any of the 3 preceding embodiments, wherein the method comprises the interface module (20) providing to the executor module (30) via the job communication channel (72), a cancel-all command instructing the executor module (30) to cancel execution of all the jobs (52).

M91. The method according to any of the 4 preceding embodiments and with the features of embodiment M39, wherein the method comprises the executor module (30) providing to the interface module (20) via the job communication channel (72), for each job (52), respective state data indicative of the job state (91).

M92. The method according to any of the 5 preceding embodiments, wherein the method comprises the executor module (30) providing to the interface module (20) via the job communication channel (72), for each job (52), respective result data indicative of whether the respective robot task is completed successfully.

M93. The method according to any of the 6 preceding embodiments, wherein the method comprises the executor module (30) providing to the interface module (20) via the job communication channel (72), for each job (52), respective feedback data indicative of predefined data relevant to the respective robot task.

M94. The method according to the preceding embodiment and with the features of embodiment M70, wherein said predefined data comprise job data (56).

M95. The method according to any of the 2 preceding embodiments and with the features of embodiment M75, wherein said predefined data comprise phase data.

M96. The method according to any of the 9 preceding embodiments, wherein the method comprises the executor module (30) providing to the interface module (20) via the job communication channel (72) status data indicative of a status of the executor module (30), the status being selected from a predefined list of statuses.

M97. The method according to any of the 10 preceding embodiments, wherein the job communication channel (72) utilizes a client-server communication protocol, wherein the interface module (20) implements the client and the executor module (30) implements the server.

M98. The method according to any of the 11 preceding embodiments, wherein the job communication channel (72) utilizes a robot (100) operating system action comprising an action client and an action server, wherein the interface module (20) implements the action client and the executor module (30) implements the action server.

M99. The method according to any of the preceding embodiments, wherein the method comprises the interface module (20) sending a command to the executor module (30) via an instant action communication channel (74), wherein the command is selected from a predetermined list of commands.

M100. The method according to the preceding embodiment and with the features of embodiment M87, wherein the interface module (20) and the executor module (30) are configured to communicate in parallel via the job communication channel (72) and the instant action communication channel (74).

M101. The method according to any of the 2 preceding embodiments and with the features of embodiment M87, wherein the job communication channel (72) and the instant action communication channel (74) are independent from each other.

M102. The method according to any of the 3 preceding embodiments, wherein the method comprises the executor module (30): executing the command in parallel to the robot task; or interrupting execution of a robot task upon receiving a command and executing the command.

M103. The method according to any of the 4 preceding embodiments, wherein the instant action communication channel (74) is a unidirectional channel.

M104. The method according to any of the preceding embodiments, wherein the method comprises the executor module (30) sending a command state to the interface module (20) via a state communication channel (76), wherein the command state is selected from a predetermined list of command states.

M105. The method according to the preceding embodiment, wherein the predetermined list of command states comprises command executed, command postponed and command rejected.

M106. The method according to any of the 2 preceding embodiments and with the features of embodiment M99, wherein the interface module (20) and the executor module (30) are configured to communicate in parallel via the state communication channel (76) and the instant action communication channel (74).

M107. The method according to any of the preceding embodiments, wherein the executor module (30) comprises an executor behavior tree (500).

M108. The method according to the preceding embodiment, wherein the method comprises the executor component (30) using the executor behavior tree (500) to determine which robot task to perform.

M109. The method according to any of the 2 preceding embodiments and with the features of embodiment M65, wherein the executor behavior tree (500) is configured to call the respective job behavior tree (40) of each job (52).

M110. The method according to any of the 3 preceding embodiments and with the features of embodiment M65, wherein each job behavior tree (40) is a subtree of the executor behavior tree (500).

M111. The method according to any of the preceding embodiments and with the features of embodiment M65 or M107, wherein each behavior tree (40, 500) comprises nodes including a root node and leaf nodes, wherein each node comprises computer instructions.

M112. The method according to the preceding embodiment, wherein the behavior tree (40, 500) comprises intermediate nodes and wherein at least some of the leaf nodes are connected with the root node via the intermediate nodes.

M113. The method according to any of the 2 preceding embodiments, wherein each node is configured to return a node state when executed, wherein the node state is selected from a list of node states.

M114. The method according to any of the 3 preceding embodiments, wherein the nodes are connected with directed edges.

M115. The method according to the preceding embodiment, wherein the root node has no incoming edges and one outgoing edge and the leaf nodes have no outgoing edges and one incoming edge

M116. The method according to any of the 2 preceding embodiments and with the features of embodiment M112, wherein the intermediate nodes comprise one incoming edge and one or more outgoing edges.

M117. The method according to any of the 3 preceding embodiments, wherein each of the directed edges connects a respective pair of the nodes by originating from one of the nodes, which is defined as a parent node in the pair, towards the other node in the pair, which is defined as a child node in the pair.

M118. The method according to the preceding embodiment and with the features of embodiment M113, wherein each child node is configured to return its node state to its parent node.

M119. The method according to any of the 2 preceding embodiments and with the features of embodiment M113, wherein the node state of each parent node depends on the node state of at least one of its child nodes.

M120. The method according to any of the 3 preceding embodiments, wherein executing the behavior tree (40, 500) comprises each parent node calling one or more of its child nodes.

M121. The method according to any of the 4 preceding embodiments, wherein executing the behavior tree (40, 500) for one execution cycle comprises calling the root node once.

M122. The method according to any of the preceding embodiments and with the features of embodiment M113, wherein the list of node states comprises: success, running and failure.

M123. The method according to any of the preceding embodiments and with the features of embodiment M113, wherein the list of node states comprises an initialized state, wherein the state initialized indicates that a node has been initialized and is ready for execution.

M124. The method according to any of the preceding embodiments and with the features of embodiment M113, wherein the list of node states comprises a suspended state, wherein the state suspended indicates that a node has been paused.

M125. The method according to any of the preceding embodiments and with the features of embodiment M113, wherein the list of node states comprises an invalid state, wherein the state invalid indicates that a node has been created, but is not ready for execution yet.

M126. The method according to any of the preceding embodiments and with the features of embodiment M113, wherein the list of node states comprises an aborted state, wherein the state aborted indicates that a node itself has stopped execution of this node.

M127. The method according to any of the preceding embodiments and with the features of embodiment M113, wherein the list of node states comprises a preempted state, wherein the state preempted indicates that a user or a behavior tree (40, 500) executive has stopped the execution of the node.

M128. The method according to any of the preceding embodiments, wherein the robot (100) is an autonomous robot (100), such as an autonomous forklift.

M129. The method according to any of the preceding embodiments, wherein the robot (100) includes a mobile base and/or a manipulator.

M130. The method according to any of the preceding embodiments, wherein the robot (100) is an autonomously driving robot (100).

M131. The method according to any of the preceding embodiments, wherein the robot (100) is adapted to pick up objects.

M132. The method according to any of the preceding embodiments, wherein the robot (100) includes a sensor and the method includes sensing information by means of the sensor and effecting the robot (100) to respond to the information.

M133. The method according to any of the preceding embodiments, wherein the robot (100) comprises a drive unit configured to move the robot (100).

M134. The method according to any of the preceding embodiments, wherein the robot (100) comprises a pick-up unit (106) configured to pick up at least one object.

M135. The method according to the preceding embodiment, wherein the pick-up unit comprises at least one gripper (108).

M136. The method according to any of the preceding embodiments, wherein the robot (100) comprises a shelf unit (112) configured to store at least one object.

M137. The method according to any of the preceding embodiments, wherein the robot is an autonomous vehicle.

M138. The method according to any of the preceding embodiments, wherein the robot comprises a battery.

M139. The method according to any of the preceding embodiments, wherein one of the at least one robot task comprises a task for the robot to charge its batteries.

M140. The method according to any of the preceding embodiments, wherein one of the at least one robot task comprises a task for the robot to navigate.

M141. The method according to any of the preceding embodiments, wherein one of the at least one robot task comprises a task for the robot to pick-up an object.

M142. The method according to any of the preceding embodiments, wherein one of the at least one robot task comprises a task for the robot to put down an object.

M143. The method according to any of the preceding embodiments, wherein one of the at least one robot task comprises a task for the robot to detect an object.

Below, system embodiments will be discussed. These embodiments are abbreviated by the letter "S" followed by a number. When reference is herein made to system embodiments, these embodiments are meant.

S1. A system comprising an interface component (25) and an executor component (30), wherein the system is configured to carry out the method according to any of the preceding method embodiments.

S2. The system according to the preceding embodiment, wherein the interface component (25) and the executor component (30) are part of a data processing system.

S3. The system according to any of the preceding system embodiments, wherein the interface component (25) and the executor component (30) are the same component.

S4. The system according to any of the preceding system embodiments, wherein the system further comprises a memory system (37), such as, a database (37).

S5. The system according to any of the preceding system embodiments, wherein the system further comprises at least one tasking entity (10).

S6. The system according to any of the preceding system embodiments, wherein the system further comprises a robot (100).

S7. The system according to the preceding embodiment, wherein the robot (100) includes a mobile base and/or a manipulator.

S8. The system according to any of the 2 preceding embodiments, wherein the robot (100) is an autonomously driving robot (100), such as an autonomous forklift.

S9. The system according to any of the 3 preceding embodiments, wherein the robot (100) is adapted to pick up objects.

S10. The system according to any of the 4 preceding embodiments, wherein the robot (100) includes a sensor and the method includes sensing information by means of the sensor and effecting the robot (100) to respond to the information.

S11. The system according to any of the 5 preceding embodiments, wherein the robot (100) comprises a drive unit configured to move the robot (100).

S12. The system according to any of the 6 preceding embodiments, wherein the robot (100) comprises a pick-up unit (106) configured to pick up at least one object.

S13. The system according to the preceding embodiment, wherein the pick-up unit comprises at least one gripper (108).

S14. The system according to any of the 8 preceding embodiments, wherein the robot (100) comprises a shelf unit (112) configured to store at least one object.

Below, further embodiments will be discussed.

C1. A computer program product comprising instructions which when executed by a system comprising an interface component (25) and an executor component (30) and further optionally a robot (100), causes the system to carry out the method according to any of the preceding method embodiments.

### Brief description of the drawings

| | |
|---|---|
| Fig. 1 | depicts a system for tasking a robot; |
| Fig. 2 | depicts a job data structure; |
| Fig. 3 | depicts a job state machine; |
| Fig. 4 | depicts a job behavior tree; |
| Fig. 5 | depicts an executor behavior tree; |
| Fig. 6 | depicts a robot and a shelf storing a plurality of objects; |
| Fig. 7 | depicts components that can be comprised by an interface component and/or by an executor component. |

### Detailed description of the drawings

In the following, exemplary embodiments of the invention will be described, referring to the figures. These examples are provided to give further understanding of the invention, without limiting its scope.

The description of the figures first provides a general overview of embodiments of the present invention, before providing further details of more specific embodiments, features and steps of the exemplary embodiments of the present invention.

Embodiments of the present invention may relate to creating an abstract representation (referred to as jobs) of tasks that a robot may perform and providing an interface that may not be limited to any specific technology. The interface can allow the robots to be assigned tasks by various integrators. Embodiments of the present invention may also relate to a mechanism to associate jobs with behavior trees. Furthermore, embodiments of the present invention may also relate to logging statistics, which can facilitate evaluating how efficiently the robots are operating in the field.

According to embodiments of the present invention, goals that the robots have to achieve can be represented as jobs. Jobs can be high level commands. They can describe: the identifier of the job, the type of the task, the parameters associated to the task (e.g., the pose to reach for navigation jobs, or the item as well as the source compartment where the item is stored for pick jobs) and/or the priority of the task. Jobs can be sent to the robots via an abstract interface, which can be implemented as an ROS (robot operating system) action, which can allow sending a goal, receiving feedback on the goal's status, retrieving the final result on termination of the goal, as well as aborting the goal, if necessary. Said interface may allow commanding robots via different protocols, e.g., gRPC, VDA5050, etc.

On top of a job action server, quick actions that the robot may execute, possibly in parallel to jobs, e.g., instant actions of VDA5050, can be sent to the main behavior tree of the robot via a request represented as an ROS topic. Their status and result can be represented via a ROS topic as well. The behavior tree running on the robot may consume the goal sent on the action channel and may attempt to execute one job at a time. In parallel, it can check for potential requests and if they can be executed at the time of the request (possibly in parallel to the currently executed job), or they need to be postponed, or rejected.

The job can be a well-defined and can make the behavior tree running on the robot agnostic to different technologies used to task the robot.

Jobs can be logged in a relational database on robots. Such logs can be used to link all the information acquired by the robot regarding the jobs while performing tasks. Jobs in the database can be associated to a state machine that the behavior tree running on the robot can act upon. Jobs in a queued state can be picked up and executed by the behavior tree that will try to transition them to one of the terminal states. The information related to the jobs can be then used to statistically analyze the robot operations and reconstruct their entire history on demand.

Subtrees in the behavior tree running on the robot can be associated with a job type, which can be divided into job phases (e.g., a picking job is divided into preparing job, navigate to source, find item, pick item from shelf and put into backpack) that can facilitate understanding how the robots are performing in the field. This subdivision can be performed by introducing labelled behavior tree decorators that can log in the database a phase name, its starting timestamp, and its duration. These logs can be linked to the previously mentioned job logs. Subdividing the job into its phases, linking these phases to behavior subtrees and then tracking their execution in a database facilitates tracking how the robots perform in the field.

Different tasking entities can be in charge of tasking the robot with orders. Examples of the tasking entities can include: a third party multi robot coordination (MRC) system tasking the robot via VDA5050; a proprietary coordination system called robot control center (RCC) tasking the robot via a proprietary protocol implemented using Message Queuing Telemetry Transport (MQTT); a user interaction device allowing an external user to task and interact with the robot and/or other coordination systems tasking the robot via other protocols.

Whatever the representation of the requests and jobs coming to the robots, the present invention can utilize specific pieces of code (i.e., assemblies) that can interface the tasking entities with a unified interface that makes the robot agnostic to the technology used to control it. In particular, the present invention may utilize an ROS action to communicate jobs to the robots and retrieve their execution status. The interface can be configured to allow constraining the jobs as well as updating them, e.g., to reflect the requirements of VDA5050. Additionally, two ROS topics can be utilized to send requests to the robot and receive feedback about them. An executor behavior tree engine can be configured to handle the action server and the request topics.

When jobs are accepted by the robot, they can be written to an internal database to be able to write and read information about them. It can be advantageous to permanently store such information in the database to allow the robot to continue its operation after potential reboots and to introspect them for statistical and debugging purposes.

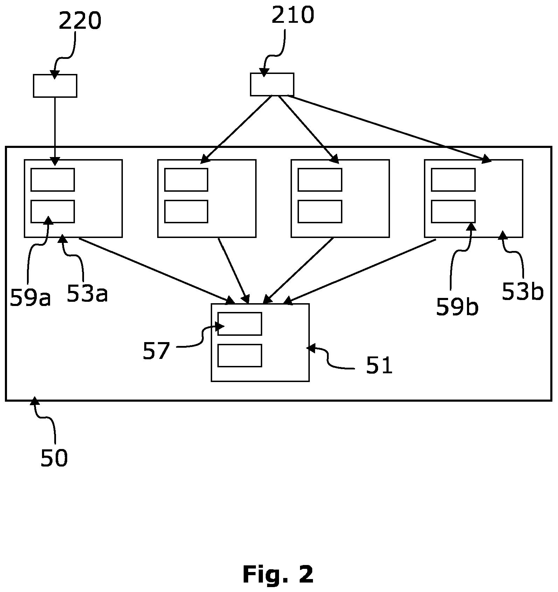

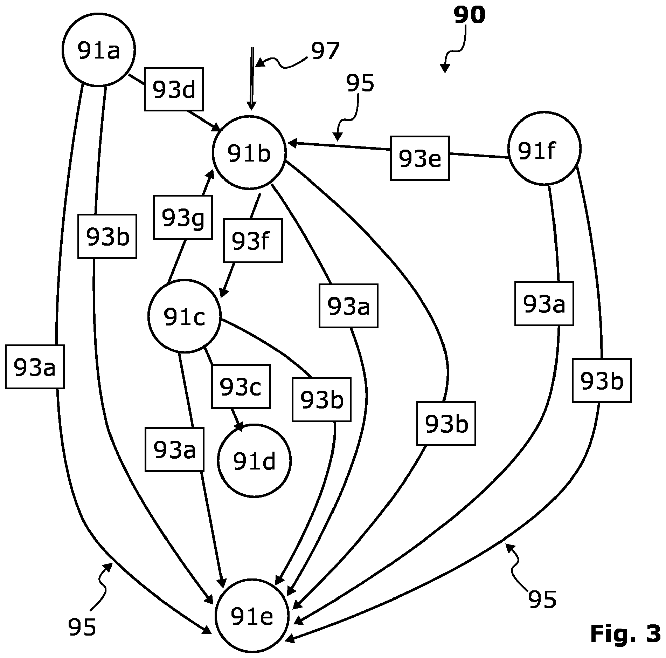

The jobs can have a uniform structure (see e.g., Fig. 2) and can be associated with a state machine (see e.g., Fig. 3), which can be used by the robot to understand the progress made toward terminating a job.

The database can represent concepts in an object-oriented fashion. All the jobs executed on the robots can be instances of job type classes that can all inherit from a basic abstract job class/table. For every job type, there can be a dedicated subtree that can instruct the robot how to achieve the related goal.

When a robot fails to achieve a specific goal due to process-related issues (e.g., a box cannot be found because it is not where it should be, or all the paths to a target are blocked), the aforementioned job tree can flag the job as problematic so that the parent tree (i.e., the executor behavior tree) can fetch the next available job to be executed. Leveraging the job concept, the robot history can be divided into 'episodes' that can allow easily retrieving data for debugging purposes.

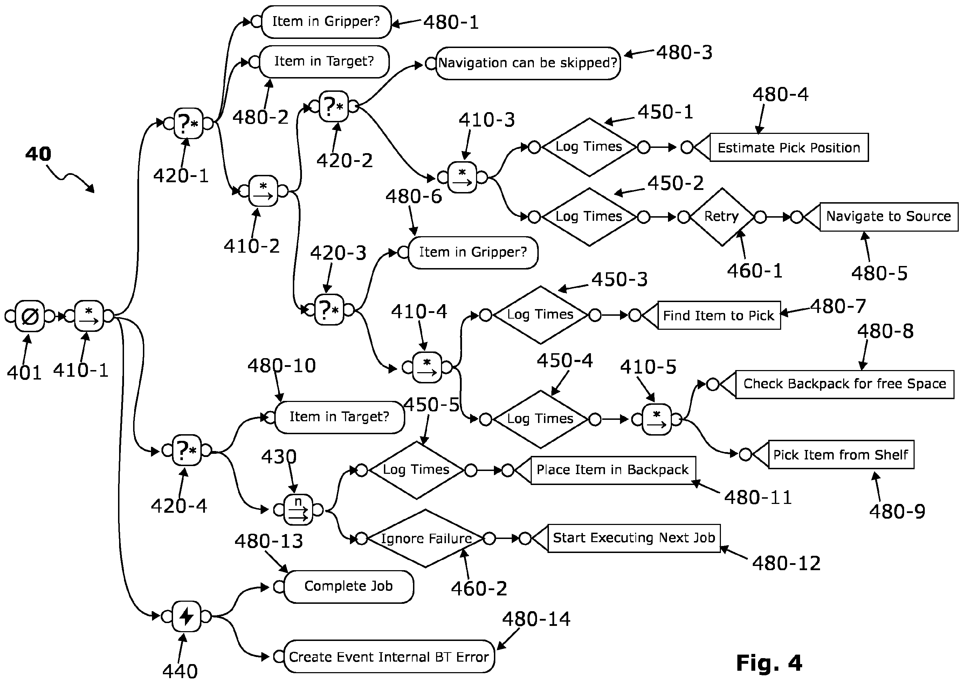

The job subtrees can represent a description of what the robot can be tasked to do from the point of view of an external observer. Jobs can be composed of subtrees representing job phases which are high-level actions that the robot has to successfully complete in order to terminate and achieve the goal of a job. Examples of such phases can be navigating to a picking source, finding an item to pick, or picking up an item from a container, as shown in Fig. 4. Such job phase subtrees can be decorated with decorator nodes that can log their overall duration. This can allow answering common questions being raised when the operation of the robot needs to be analyzed. Questions like "how long did the robot need on average to pick/find an item?" are common examples of such interrogations. These job phases can be planning action primitives with preconditions and post conditions. For example, the job phase "pick from a shelf", will result in an item being in the gripper. Such pre- or post-conditions can be logged in the database and used in these trees to ensure that the robot resumes at the right point in the plan in case of power loss or in case the behavior tree is stopped.

The present invention may thus relate to a system for commanding robots to perform high-level tasks called Jobs. Jobs can be sent to the robots via an abstract interface implemented as a ROS action, which can allow commanding robots via different protocols. The behavior tree running on the robot can consume the goals sent on the action channel and may attempt to execute one job at a time, reporting its status as feedback and its final result. At the same time, the behavior tree may additionally listen on the request topic to execute potential requests, possibly in parallel to jobs. Jobs can be logged in a relational database on robots and can be associated with a state machine that the behavior tree may act upon. Jobs in a queued state can be picked up and executed by the behavior tree that will try to transition them to one of the terminal states. Labelled decorator nodes can be used to log in the database a phase name, its starting timestamp, and its duration, which can facilitate understand how the robots are performing in the field.

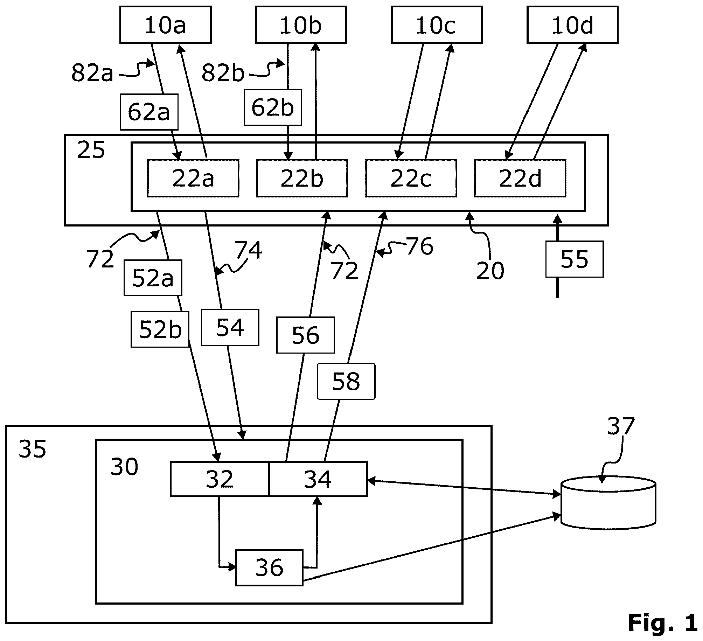

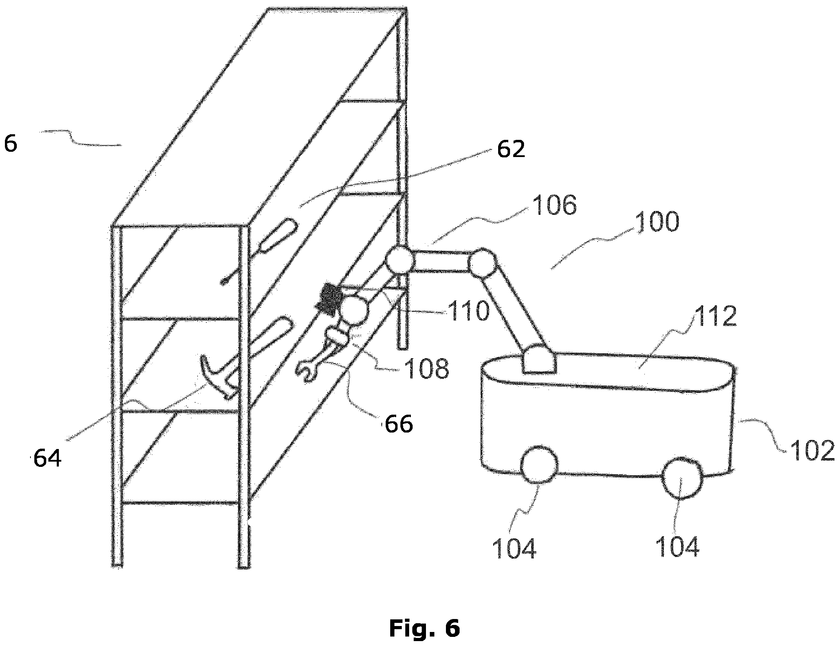

**Fig. 1** depicts a system for tasking robots (e.g., the robot 100 depicted in Fig. 6). In particular, the robot may be provided with tasks from different tasking entities 10 (which can also be referred to as integrators). Fig. 1 depicts 4 different tasking entities 10a-10d. However, it will be understood that this is merely exemplary. Each tasking entity 10 can provide tasks by sending tasking messages 62 via a tasking channel 82. In the example of Fig. 1, a first tasking entity 10a can send a first tasking message 62a descriptive of a first task via a first tasking channel 82a. A second tasking entity 10b can send a second tasking message 62b descriptive of a second task via a second tasking channel 82b. Similarly, a third tasking entity 10c, a fourth tasking entity 10d and/or an n-th tasking entity (not shown) may send respective tasking messages via respective tasking channels. It will be understood that while in Fig. 1 each tasking entity is depicted as comprising a respective tasking channel 82, in some embodiments, one or more tasking entities 10 may also share a tasking channel 82, i.e., utilize the same tasking channel 82.

At least some of the tasking entities 10 may be independent from each other. In particular, at least some of the tasking entities 10 may be configured to communicate using different communication protocols. For example, at least some of the tasking entities 10 may generate tasking messages 62 comprising structures. In other words, at least some of the tasking messages 62 may respectively comprise different instances of tasking data structures.

To deal with the diversity of the tasking messages 62, the system may comprise an interface component 25 which can be configured to execute an interface module 20. The interface module 20 can comprise computer instructions which can be executed by the interface component 25. The interface module 20 can be configured to receive tasking messages 62 and to transform them according to a uniform data structure, which is herein referred to as a job data structure 50 (see Fig. 2). In particular, the interface module 20 can generate jobs 52 based on the tasking messages 62. While the tasking messages 62 can comprise different instances of tasking data structures, the jobs 52 can be instances of the same data structure, i.e., of the job data structure 50.

For example, the interface module 20 can receive the first tasking message 62a and can generate based thereon a first job 52a. Both the first job 52a and the first tasking message 62a can be descriptive of the same robot task. The interface module 20 can also receive a second tasking message 62b and can generate based thereon a second job 52b. Both the second job 52b and the second tasking message 62b can be descriptive of the same robot task. The first job 52a and the second job 52b can be different instances of the job data structure 50. That is, the first job 52a and the second job 52b can be structured according to the job data structure.

It will be understood that the tasking messages may not necessarily correlate one-to-one with a job 52. For example, the interface module 20 may generate a plurality of jobs 52 based on a single tasking message 62 and/or it may generate a single job 52 based on a plurality of tasking messages 62 and/or it may generate a single job 52 based on a single tasking message 62. That is, the interface module 52 may translate, consolidate (i.e., combine) and/or disintegrate (i.e., dissemble) tasking messages(s) 62 into job(s) 52. The interface module 20 can comprise a plurality of decoding modules 22, which can also be referred to as assemblies 22. In Fig. 1, the interface module 20 is depicted with four decoding modules 22a-22d. However, it will be understood that this is merely exemplary and that the interface module 20 may comprise more or fewer decoding modules 22.

The decoding modules 22 can be independent from each other. For example, each decoding module 22 can be a standalone software component of the interface module 20. Moreover, each decoding module 22 can be configured to decode a respective tasking data structure. The functionality of the interface module 20 can thus be enriched by adding additional decoding modules 22.

Each decoding module 22 can be configured to generate at least one job 52 based on at least one tasking message 62. Each tasking message 62 can be directed to the respective decoding module 22 which can decode it to generate at least one respective job 52 based thereon. For example, a first decoding module 22a can receive the first tasking message 62a which can comprise a first tasking data structure and based thereon can generate a first job 52a. Similarly, a second decoding module 22b can receive the second tasking message 62b which can comprise a second tasking data structure and based thereon can generate a second job 52b. The first job 52a and the second job 52b can be instances of the job data structure 50, which is discussed with reference to Fig. 2.

While in Fig. 1, for each tasking entity 10, there is a respective decoding module 22, it will be understood that this is not necessary. That is, in some embodiments, tasking entities 10 which use the same tasking data structure may share the same decoding module 22. Moreover, the interface module 20 may comprise one or more hybrid decoding modules (not shown), wherein each hybrid decoding module can be configured to decode one or more different tasking data structures.

The system can further comprise an executor component 35. The executor component 35 can be configured to control a respective robot. That is, the executor component 35 can cause the robot to perform robot tasks. For example, the executor component 35 can be one or more processors comprised by the robot.

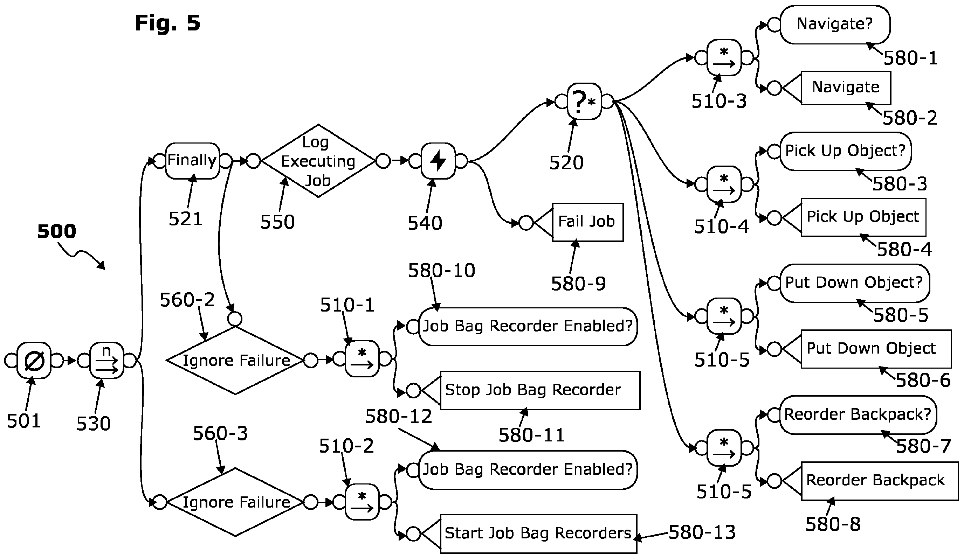

The executor component 35 can be configured to execute an executor module 30. The executor module 30 can comprise computer instructions which can be executed by the executor component 35. The executor module 30 can be configured to, *inter alia,* determine which robot task the robot may execute next. For example, the executor module 30 can comprise a behavior tree, which can be referred to as a main behavior tree or alternatively as an executor behavior tree. The executor behavior tree can organize hierarchically different robot tasks that the robot can perform. An example of an executor behavior tree is depicted in Fig. 5.

The executor module 30 can receive each job 52 generated by the interface module 20 and can decide when the robot performs each robot task that each job 52 is descriptive of. The executor module 30 can provide, for each job 52, job feedback data 56, which can for example include the status of the respective job 52. In turn, the interface module 20 can provide the feedback data 56 to a respective tasking entity 10.

The executor module 30 can comprise a factory module 32 which can be configured to receive and/or queue jobs 52. The executor module 32 can comprise a tree executor module 36 which can be configured to receive a job 52 from the factory module 32 and execute an executor behavior tree causing the robot to perform the robot task of the job 52. The executor module 30 can comprise a publisher module 34 which can be configured to provide data related to job to a memory system 37, such as, database 37 and/or to the interface module 20.

The executor module 30 and the interface module 20 can be configured to communicate via a job communication channel 72. The interface module 20 can provide jobs 52 to the executor module via the job communication channel 72. Moreover, the executor module 30 can provide job feedback data 56 to the interface module 20. The job communication channel 72 can be implemented as an ROS action 72, wherein the interface module 20 can implement the action client (or master) and the executor module can implement the action server (or slave).

The job communication channel 72 can be used to communicate jobs 52 which are descriptive of robot tasks that are generally complex and require multiple steps (or phases) to be performed. In addition to the job communication channel 72, an instant action communication channel 74 can be implemented between the interface module 20 and the executor module 30. The instant action communication channel 74 can be utilized to communicate commands to the executor module 30. Said commands can be instant actions that can be performed in parallel to the robot tasks. They are less complex than the robot tasks and require less time to be accomplished. The instant action communication channel 74 can be implemented as an ROS topic 74. In addition, a state communication channel 76 can also be utilized to communicate command states from the executor module 30 to the interface module 20. The command state may for example be indicative of whether a respective command can be executed, is executed, needs to be postponed, or is rejected. The state communication channel 76 can also be implemented as an ROS topic 76.

The ROS action 72 is a so-called client-server communication channel. ROS topics 74, 76 are subscription channels, wherein one party produces messages to a respective channel and one or more other parties "subscribed" to the respective channel can receive those messages. Other subscription channels can also be implemented between the executor module 30 and the interface module 20. For example, a sensor subscription channel (not shown) can be utilized to communicate sensor data collected by one or more of the robot sensors from the executor module 30 to the interface module 20, which can then provide the sensor data to the tasking entities.

The interface module 20 can also be subscribed to a robot state channel for receiving a robot state 55.

The system can further comprise a memory system 37, such as, a database 37. The memory system 37, e.g., the database 37, can be used to log data related to jobs, as it will be discussed further below.

**Fig. 2** depicts a job data structure 50. As discussed, each job 52 generated by the interface module 20 can be an instance of the job data structure 50. That is, each job 52 can be structured according to the job data structure 50.

The job data structure 50 can be a polymorphic class. It can comprise a basic definition 51 which can comprise basic data elements 57 and a type definition 53 which can comprise type-specific data elements 59. The type specific data elements 59 can be different between different type definitions 53. The type definition 53 can inherit from the basic definition 51 the basic data elements 57. Thus, each type definition 53 can comprise the same basic data elements 57 and can comprise its own type-specific data elements 59.

Thus, the job data structure 50 may comprise a first type definition 53a which can comprise a first type-specific data element 59a, in addition to the basic data elements 57. Similarly, the job data structure 50 may comprise a second type definition 53b which can comprise a second type-specific data element 59b, in addition to the basic data elements 57. The first type-specific data element 59a can be different from the second type-specific data element 59b. For example, the first type-specific data element 59a may be indicative of a target pose, while the second type-specific data element 59b may be indicative of an item.

The basic data elements 57 may be indicative of a job identifier 57, which can comprise a unique identifier, a job priority and a job state.

Each type definition 53 can correspond to a respective type of the robot tasks. Thus, instances of the same type definition 53 are descriptive of different instances of the same robot task type. For example, a first type definition 53a can relate to a navigation job. It can comprise, inter alia, a data element 59a indicative of a target pose, i.e., the target position and orientation that the robot is expected to reach. A second type definition 53b can be an item transport job. It can comprise, inter alia, a data element 59b which can be indicative of an item. It can also comprise further type-specific data elements 59 which can be indicative of an origin pose and of a target pose. A third type definition 53 can be a locate item job 53. It can comprise data elements 59 indicative of an item and of an origin location of the item. A fourth type definition can be a charge battery job 53. It can comprise data elements indicative of a target charger.

Moreover, the type definitions 53 may use external definitions 210, 220 which are not part of the job data structure 50. The external definition 210 may for example be an item definition 210 comprising data elements descriptive of the item. The external definition 220 may for example be a robot pose definition 220 comprising data elements indicative of a robot pose. Thus, the respective type definitions 53 may use the item definition 210 to create item instances and the pose definition 220 to create robot pose instances.

**Fig. 3** depicts a job state machine 90 indicative of job states 91, transition links 95 and transition conditions 93. The job states 91 are indicated with circles, the transition links 95 are indicated with directed arrows linking two job states 91 and the transition conditions are indicated with boxes positioned on top of the transition links. As indicated, each transition link 95 can be associated with a respective transition condition 93.

The job states 91 may include a created state 91a, a queued state 91b, an active state 91c, a completed state 91d, a problem state 91f and an aborted state 91e. Jobs 52 may initially be set to the created state 91a and can be transitioned to one of the terminal states, which in this example are the completed state 91d and the aborted state 91e. It will be understood that some jobs 52 may also be initialized with the queued state 91b as indicated by initialization 97.

The transition conditions 93 may include: an undo condition 93a, an abort condition 93b, a complete condition 93c, an enqueue condition 93d, a retry condition 93e, a start condition 93f and a deactivate condition 93g.

Thus, each job 52 can comprise a job state 91 and can transition between different job states 9 according to transitions which can be defined in a job state machine 90. The executor module 30 can utilize the job state machine 90 to change the job state 91 of each job 52 based on the transition conditions 93 and the transition links 95.

**Fig. 4** depicts an exemplary job behavior tree 40. As discussed, each job type can be associated with a respective job behavior tree 40 that comprises actions that can instruct the robot on how to perform the respective robot task. The exemplary job behavior tree 40 depicted in Fig. 4 relates to an item pick-up job.

The behavior tree 40 comprises a plurality of nodes 401-480 which are interconnected with directed edges. The nodes 401-480 are indicted in Fig. 4 with boxes and the directed edges with arrows between the nodes 401-480. Each directed edge connects a respective pair of nodes by originating from one of the nodes in the pair, which is thus defined as a parent node in relation to the other node in the pair, towards the other node in the pair, which is thus defined as a child node in relation to the other node in the pair. During the execution of the behavior tree 40, each parent node calls one or more of its child nodes. This way, the behavior tree can be traversed from higher ranking nodes to lower ranking ones during execution.

Each node of the tree is configured to return a state indicative of its execution status. Typically, each node can return its state to its parent node (except the root node which has no parent node). The state can be selected from a list of node states which can generally include: SUCCESS, FAILURE and RUNNING.

The behavior tree 40 comprises a root node 401, which in the Figure is identified as a box with a null sign "Ø". Root node 401 has no incoming edge, but only one outgoing edge towards node 412. An execution cycle of the BT starts with the execution of the root node 401.

In addition to the root node 401, the behavior tree 40 comprises leaf nodes 480, which are individually numbered as 480-1 to 480-14. Leaf nodes 480 comprise one incoming edge but no outgoing edge. In other words, leaf nodes 480 comprise no child nodes. Typically, leaf nodes 480 relate to actions or status checks that the robot can perform.

Leaf nodes 480-1, 480-6 "Item in Gripper?" can cause the robot to check and determine whether there is an item in its gripper. Leaf node 480-2, 480-10 "Item in Target" can cause the robot to check and determine whether the item is in the target. Leaf node 480-3 "Navigation can be skipped?" can cause the robot to check and determine whether navigation to location can be skipped, i.e., whether the robot has already reached said location. Leaf node 480-4 "Estimate Pick Position" can cause the robot to estimate a position where an item can be picked. Leaf node 480-5 "Navigate to Source" can cause the robot to navigate, i.e., move, towards a source location where the item to be picked can be found. Leaf node 480-7 "Find Item to Pick" can cause the robot to find the item to pick. Leaf node 480-8 "Check Backpack for free Space" can cause the robot to check whether the backpack of the robot (also referred to as shelf unit 112, see Fig. 6) comprises free space for further items. Leaf node 480-9 "Pick Item from Shelf" can cause the robot to pick an item from the shelf (not to be confused with the shelf unit 112 of the robot) where the item is located. Leaf node 480-11 "Place Item in Backpack" can cause the robot to place the item in the backpack. Leaf node 480-12 "Start executing Next Job" can cause the robot to start executing the next job. That is, the executor module 30 can pick the next job that is in the queue state for execution. Leaf node 480-13 "Complete Job" can cause the robot (i.e., the executor component 35) to change the state of a completed job to the completed state. Leaf node 480-14 "Create Event Internal BT Error" can cause the robot to create an internal behavior tree error event.

Thus, the leaf nodes 480 can relate to an exemplary set of actions and/or status checks that the robot can perform to complete jobs relating to an "item pick-up" robot action. More particularly, when a job 52 relating to an "item pick-up" robot action is provided to the executor component 35, the latter can based thereon execute the behavior tree 40 to cause the robot to perform the item pick-up robot action.

The leaf nodes 480 are connected to the root node 401 via intermediate nodes 410-460. The intermediate nodes 410-460 comprise one incoming edge and one or more outgoing edge. That is, each intermediate node 410-460 can comprise a parent node and one or more child nodes. Some intermediate nodes 410-460 can be configured to control the flow of execution of the BT and can thus be referred to as control-flow nodes 410-440. The control flow nodes 410-440 can be configured to call their child nodes according to predetermined conditions. Other intermediate nodes 450-460 can have auxiliary functions. These intermediate nodes 450-460 can be referred to as decorator nodes 450-460 (indicated with diamond shaped boxes). Some functions that the decorator nodes 450-460 can comprise are: time logging (e.g., nodes 450), variable value logging, negating the return state of its child node, etc. Typically, decorator nodes 450-460 comprise one parent node and one child node.

Some of the intermediate nodes 410-460 are selector nodes 420, which are individually numbered as 410-1 to 410-4. Said node 420 is a control flow node 410-440. In the depicted embodiment, selector nodes 420 are identified by a box with a question mark "?" inside. Selector nodes 420 are configured to call its child nodes according to a predetermined order until one of them succeeds. In other words, the selector nodes 420 will succeed (and thus return the state SUCCESS) if one of its child nodes succeeds and it will fail (and thus return the state FAILURE) if all of its child nodes fail. The selector nodes 420 will return RUNNING if the child node it has called returns RUNNING.

Typically, selector nodes can be configured to execute their child nodes according to a predetermined order, which in Fig. 2 is indicated from top to bottom. However, the selector nodes can be configured to execute their child nodes according to other execution orders as well. In particular, the selector nodes 420 are selector nodes 420 with memory (which can also be referred to as priority selector nodes 420) - which is indicated by the presence of an asterisk symbol "*" within the respective box. Selector nodes 420 with memory, in addition to the behavior explained above, can be further configured to dynamically rank child nodes according to their priority and to execute them according to the order of priority.

Some of the intermediate nodes 410-460 are sequence nodes 410, which are individually numbered as 410-1 to 410-5. Said nodes 410 are control flow node 410. Sequence nodes 410 are generally identified by a box with an arrow sign "→". The sequence nodes 410 are configured to call their child nodes in order until one of them fails. In other words, the sequence nodes 410 will succeed (and thus return the state SUCCESS) if all of its child nodes succeed and it will fail (and thus return the state FAILURE) if one of its child nodes fail. The sequence nodes 410 will return RUNNING if the child node it has called returns RUNNING.

Typically, sequence nodes can be configured to execute their child nodes according to a predetermined order, which in Fig. 2 is indicated from top to bottom. However, the sequence nodes can be configured to execute their child nodes according to other execution orders as well. In particular, the sequence nodes 410 are sequence nodes 410 with memory - which is indicated by the presence of an asterisk symbol "*" within the respective box. Sequence nodes 410 with memory, in addition to the behavior explained above, can be further configured to dynamically rank child nodes according to their priority and to execute them according to the order of priority. For example, the sequence nodes 410 with memory can be configured to store in a respective memory the respective child node that fails, such that in a subsequent execution, the sequence nodes 410 start execution from the child node that previously failed.

One of the intermediate nodes 410-460 is a parallel node 430 which is identified by a box with two parallel arrow signs "→" and the number "n". Said node 430 is a control flow node 410-440. Parallel nodes 430 can be configured to execute their child nodes in parallel. Similar to the sequence nodes 410, parallel nodes will succeed (and thus return the state SUCCESS) if all of its child nodes succeed and it will fail (and thus return the state FAILURE) if one of its child nodes fail. The parallel node 430 will return RUNNING if the child node it has called returns RUNNING.

One of the intermediate nodes 410-460 is a failure node 440. Said node 440 is a control flow node 410-440. It is configured to execute a fallback task (i.e., node 480-14) if one of its child nodes fails (i.e., if node 480-13 fails).

Some of the intermediate nodes 410-460 are logging nodes 450, which are individually numbered as 450-1 to 450-5. These nodes 450 are decorator nodes 450-460. Loging nodes 450 can be configured to record in a memory system, e.g., in a database data about execution of its child node. For example, logging nodes 450 can be configured to record in a memory system, e.g., in a database (e.g., in the memory system 37) timing data, such as, start time, end time and/or duration of its child node.

Some of the intermediate nodes 410-460 are auxiliary nodes 460, which are individually numbered as 460-1 to 460-2. These nodes 460 are decorator nodes 450-460. Auxiliary nodes 450 can comprise different auxiliary functions. For example, auxiliary node 460-1 can be configured to cause its child node to execute several times. Auxiliary node 460-2 can be configured to always succeed (and hence return SUCCESS) irrespective of the state returned by its child node.

The behavior tree 40 can be executed according to the above-described behaviors of the nodes 401-480.

Each job 52 can be associated with a respective job behavior tree 40 depending on the type of the job 52. For example, each job 52 relating to an "item pick-up" robot task can be associated with the job behavior tree 40 exemplified in Fig. 4. It will be understood that other job types, e.g., a navigation job 52 can be associated with another job behavior tree comprising actions related to navigation.

Each robot task may require one or more actions to be completed. These actions can be referred to as robot subtasks or job phases. That is, each robot task can comprise several robot subtasks. Moreover, each robot subtask can be associated with a respective subtree which can be used to control the robot to complete the respective robot subtask. These subtrees can be referred to as phase subtrees. Thus, the job behavior tree 40 can comprise one or more phase subtrees, one for each robot subtask needed to complete the respective robot task.

In Fig. 4, the phase subtrees are preceded with logging nodes 450, which can also be referred to as phase decorator nodes 450, and can be configured to log phase data. Thus, the phase decorator nodes 450 can be used to define phase subtrees in the job behavior tree 40 and to track the progress of the job phases. For example, in Fig. 4, a first phase subtree consists of nodes 450-1 and 480-4; a second phase subtree consists of nodes 450-2, 460-1 and 480-5; a third phase subtree consists of nodes 450-3 and 480-7; a fourth phase subtree consists of nodes 450-4, 410-5, 480-8 and 480-9 and a fifth phase subtree consists of nodes 450-5 and 480-11.

**Fig. 5** depicts another behavior tree 500 which can be used to control a robot, such as the robot 100 depicted in Fig. 6. The behavior tree 500 depicted in Fig. 5 can interchangeably be referred to as a robot behavior tree 500, executor behavior tree 500 and/or main behavior tree 500. The executor behavior tree 500 can be configured to organize a set of different robot tasks that the robot can perform. That is, while the job behavior tree 40 depicted in Fig. 4 relates to a single robot task, the executor behavior tree 500 can relate to a plurality of jobs. For each robot task, the executor behavior tree 500 can be configured to call the respective job behavior tree. For example, for a pick-up object task (i.e., node 580-4) the executor behavior tree 500 can be configured to call the exemplary job behavior tree 40.

More particularly, the executor behavior tree 500 based on a particular job 52 that needs to be executed, more specifically based on its respective job type, can select a particular one of the leaf nodes 580 to execute, which in turn (at least some of them) may call respective job behavior trees 40.

Moreover, it will be understood that Fig. 5 uses the same symbols as the ones in Fig. 4. Therefore, like nodes comprise like functions.

In particular, the executor behavior tree 50 can comprise a root node 501, sequence nodes 510 with memory, a selector node 520 with memory, a parallel node 530, a fail node 540, a logging node 550, auxiliary nodes "Ignore Failure" 560 and leaf nodes 580.

The executor behavior tree 50 can further comprise a "Finally" node 521 which can be configured to call the first child node and, regardless of its status, to call next child nodes one after the other. If next child nodes succeed, the "Finally" node 521 returns the status of the first child, otherwise the "Finally" node returns false. That is, the "Finally" node 521 can first call node 550 and regardless of its status, can proceed with calling node 560-2. If node 560-2 returns "Success", the "Finally" node 521 returns the status of node 550, otherwise, the node returns "Failure"

Execution semantics of the "Finally" node 521:
- Tick the first child until it reaches a terminal state.
- Then tick all other child nodes, one after another, wherein:
   - only tick the next child node when the previous one succeeds;
   - if any child node returns a status different from SUCCESS, return such status immediately; and
   - if all child nodes succeed, return the status of the first child node.
- At any time when the task is aborted, abort its current branch. Return ABORTED once the current branch also returns ABORTED.

Leaf node 580-1 "Navigate?" checks whether navigation is required and leaf node 580-2 "Navigate" causes the robot to navigate to a predetermined location, e.g., the location where an object is to be picked up. Upon execution of node 580-2, a respective navigation job behavior tree 40 can be called.

Leaf node 580-3 "Pick-up object?" checks whether an object pick-up task is required and leaf node 580-4 "Pick-up object" causes the robot to pick up a predetermined object. Upon execution of node 580-4, a respective "object pick-up" job behavior tree 40 can be called, such as the one illustrated in Fig. 4.

Leaf node 580-5 "Put down object?" checks whether an object put down task is required and leaf node 580-6 "Put down object" causes the robot to put down an object that has been previously picked up. Upon execution of node 580-6, a respective "object put down" job behavior tree 40 can be called.

Leaf node 580-7 "Reorder Backpack?" checks whether the backpack (i.e., shelf unit) of the robot needs reordering and leaf node 580-8 "Reorder Backpack" causes the robot to reorder items in the backpack. Upon execution of node 580-8, a respective "backpack reorder" job behavior tree 40 can be called.

If one of the above jobs fails, the fail node 540 can cause node 580-9 "Fail Job" to be executed, wherein a respective job failure operation can be performed. For example, a job failure operation of node 580-9 may comprise changing the state of a job to state 91-f "problematic" (see Fig. 3).

Leaf nodes 580-10, 580-12"Job Bag Recorder Enabled?" check whether a job bag recorder is enabled, leaf node 580-11 "Stob Job Bag Recorder" causes the job bag recorder to be disabled and leaf node 580-13 "Start Job Bag Recorder" causes the job bag recorder to be enabled. The job bag recorder can refer to a job recording system that can be configured to record data produced by the robot during the execution of a job.

**Fig. 6** depicts a robot 100. It also depicts a shelf 6 wherein a plurality of different objects 62, 64, 66 can be located. As depicted, the robot 100 may comprise a base 102 including a plurality of wheels 104 (only two of which are depicted in Fig. 6) such that the robot 100 may drive. On the base 102, a pick-up unit 106 can be located. In the depicted embodiment, the pick-up unit 106 is a grappler having one or more joints. A gripper 108 adapted to grip or pick up objects can be provided at the end of the pick-up unit 106. Furthermore, at the end of the pick-up unit 106, a camera 110 may be provided. On top of the base 102, there may be a space 112 to place objects, e.g., objects 62-66. For example, the robot 100 may comprise a shelf unit 112 to store the objects 62-66.

The robot 100 may be an autonomous robot 100. That is, the robot 100 may be configured to drive autonomously. Additionally or alternatively, the robot 100 may be configured to pick-up and/or release objects autonomously. The robot 100 may in particular be used in a warehouse to pick up goods, e.g., objects 62-66 and to bring the objects 62-66 to a desired location.

A typical usage of such a robot 100 will now be described. The robot 100 may be tasked, e.g., by a user, to bring certain objects, e.g., a screw driver 62 and a wrench 66 from the shelf 6 to a destination location. The destination location may, e.g., be a location where the objects may be packed for shipping. This information, e.g., objects to pick and destination location, may be communicated to the robot 100, e.g., by means of known communication standards, such a wireless LAN. The robot 100 may autonomously navigate to the shelf 6 where the respective objects are stored. To do so, the robot 100 may access a computer memory storing the information about which object is stored in which shelf 6 of the warehouse. The robot 100 may navigate to the correct shelf 6 by means of a driving unit. Once the robot 100 has reached the correct shelf 6, the robot 100 may locate the exact location of the objects (here: the screw driver 62 and the wrench 66) by means of the camera 110. The gripper 108 may then be positioned by means of the pick-up unit 106 to the correct location to pick up the wrench 66 (as depicted in Fig. 6). Once the gripper 108 has gripped the wrench 66, the pick-up unit 106 may place the wrench 62 on the shelf unit 112. Then, this gripping and placement procedure may be repeated for screw driver 62 to also place the screw driver 62 on the shelf unit 112.

Once the desired objects are placed on the shelf unit 112, the robot 100 may navigate to the destination location, e.g., to the location for packing and/or shipping of the objects.

The robot 100 may be controlled by a particular process. This process controls the robot 100 and prioritizes the different tasks the robot 100 may have to perform. For such an autonomously driving and operating robot 100, the different tasks to be performed and to be prioritized may be much more versatile than for simpler robots. To control the robot 100, a behavior tree 60 may be used.

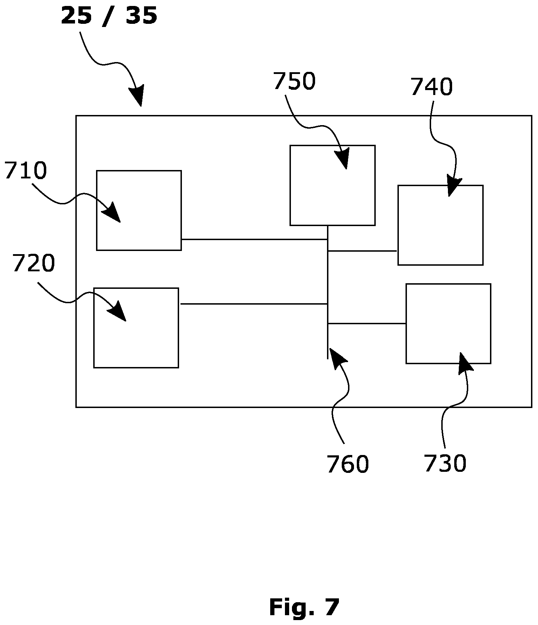

**Fig. 7** depicts exemplary components that can be comprised by the interface component 25 and/or by the executor component 35. It will be understood that in embodiments wherein the interface component 25 and the executor component 35 are not the same component, they can comprise a respective set of components 710-760.

The interface component 25 and/or the executor component 35 can be a data processing system. The interface component 25 can be configured to execute the interface module 20 (see Fig. 1) and the executor component 35 can be configured to execute the executor module 30 (see Fig. 1). In embodiments wherein the interface component 25 and the executor component are the same component, then said component can be configured to execute both the interface module 20 and the executor module 30.

The interface component 25 and/or the executor component 35 may comprise a (respective) processing unit 750 which may be singular or plural, and may be, but not limited to, a CPU (central processing unit), GPU (graphical processing unit), DSP (digital signal processor), APU (accelerator processing unit), ASIC (application-specific integrated circuit), ASIP (application-specific instruction-set processor) or FPGA (field programable gate array). The processing unit 750 may comprise one or more micro-controller units.

Further, the interface component 25 and/or the executor component 35 may comprise a (respective) memory component 740 which may be singular or plural, and may be, but is not limited to, a volatile or non-volatile memory, such as a random-access memory (RAM), Dynamic RAM (DRAM), Synchronous Dynamic RAM (SDRAM), static RAM (SRAM), Flash Memory, Magneto-resistive RAM (MRAM), Ferroelectric RAM (F-RAM), or Parameter RAM (P-RAM).

The interface module 20 may be stored in the memory component 740 of the interface component 25 and the executor module 30 may be stored in the memory component 740 of the executor component. In embodiments wherein the interface component 25 and the executor component 35 are the same component, then the interface module 20 and the executor module 30 can be stored in the same memory component 740 of said component.

Further the interface component 25 and/or the executor component 35 may comprise an external communication component 730. The external communication component 730 can be configured to send and/or receive data to/from an external device. The external communication component 730 may comprise an antenna (e.g., WIFI antenna, NFC antenna, 2G/3G/4G/5G antenna and the like), USB port/plug, LAN port/plug, contact pads offering electrical connectivity, smart card reader and the like. The external communication component 730 can send and/or receive data based on a communication protocol. Said data can be stored in the memory component 740 and can be executed by the processing unit 750. The external communication component 730 can be connected to the internal communication component 760. Thus, data received by the external communication component 730 (e.g., test data 301) can be provided to the memory component 740 and/or to the processing unit 750. Similarly, data stored on the memory component 740 and/or data generated by the processing unit 750 (e.g., test result 320) can be provided to the external communication component 730 to be transmitted to an external device.

Further, the interface component 25 and/or the executor component 35 may comprise an internal communication component 760 configured to allow the internal components 710-450 of the interface component 25 and/or the executor component 35 to communicate with each other. The internal communication component can, for example, comprise a bus connection 760.

The interface component 25 and/or the executor component 35 may comprise an input user interface 710 which can allow a user of the interface component 25 and/or the executor component 35 to provide at least one input to the interface component 25 and/or the executor component 35. For example, the input user interface 710 may comprise a button, keyboard, trackpad, mouse, touchscreen, joystick and the like.

The interface component 25 and/or the executor component 35 may comprise an output user interface 720. For example, the output user interface 710 may comprise a display 720.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A method for tasking a robot (100), the method comprising
(a) receiving with an interface component (25) at least one tasking message (62) descriptive of at least one robot task;
(b) executing with the interface component (25) an interface module (20) to generate based on the at least one tasking message (62) at least one job (52) descriptive of the at least one robot task, wherein each of the at least one job (52) is an instance of a job data structure (50);
(c) receiving with an executor component (30) the at least one job (52); and
(d) executing with the executor component (30) an executor module (30) to cause the robot (100) to perform the at least one robot task based on the at least one job (52).

2. The method according to the preceding claim, wherein the receiving in (a) comprises receiving with an interface component (25) a first tasking message (62a) descriptive of a first robot task and a second tasking message (62b) descriptive of a second robot task, wherein the first tasking message (62a) and the second tasking message (62b) comprise instances of different data structures and
wherein the executing in (b) comprises executing with the interface component (25) an interface module (20) to generate a first job (52a) descriptive of the first robot task and a second job (52b) descriptive of the second robot task based on the first and second tasking message (62b), respectively.

3. The method according to any of the preceding claims, wherein the receiving in (a) comprises receiving a plurality of tasking messages (62) and the executing in (b) comprises generating one job (52) based on the plurality of tasking messages (62).

4. The method according to any of the preceding claims, wherein the receiving in (a) comprises receiving one tasking message (62) and the executing in (b) comprises generating a plurality of jobs job (52) based on the plurality of tasking messages.

5. The method according to claim 2, wherein the method comprises the interface component (25) receiving the first tasking message (62a) from a first tasking entity (10a) and the second tasking message (62b) from a second tasking entity (10b);
wherein the first tasking entity (10a) is configured to generate tasking messages (62) according to a first data structure and the second tasking entity (10b) is configured to generate tasking messages (62) according to a second data structure, wherein the first and the second data structures are different;
wherein the first tasking entity (10a) generates the first tasking message (62a) and wherein the second tasking entity (10b) generates the second tasking message (62b).

6. The method according to any of the preceding claims, wherein the interface module (20) comprises computer instructions which when executed by the interface component (25) causes the interface to transform an instance of a data structure selected from a set of supported data structures to an instance of the job data structure (50).

7. The method according to any of the preceding claims and with the features of claim 2, wherein the interface module (20) comprises decoding modules (22), wherein each decoding module (22) is configured to transform an instance of a respective data structure to an instance of the job data structure (50);
wherein one of the decoding modules (22) is a first decoding module (22a) generating based on the first tasking message (62a) the first job (52a) and wherein another one of the decoding modules (22) is a second decoding module (22b) generating based on the second tasking message (62b) the second job (52b).

8. The method according to any of the preceding claims, wherein each job (52) is associated with a respective job state machine (90), wherein the job state machine (90) comprises a plurality of job states (91) and transition links (95) between said job states (91), wherein the transition links (95) between said states are associated with respective transition conditions (93) and
wherein the method comprises the executor component (30) checking whether one or more of the transition conditions (93) is fulfilled and upon fulfillment performing the corresponding transition(s) of the corresponding jobs (52).

9. The method according to any of the preceding claims, wherein each job (52) is associated with a respective job behavior tree (40);
wherein jobs (52) of different job types comprise different instances of different job behavior trees (40); and
wherein jobs (52) of the same job type comprise different instances of the same job behavior tree (40).

10. The method according to the preceding claim, wherein each job behavior tree (40) comprises a job decorator node (550) configured to log job data (56);
wherein the job data (56) comprise a job label, wherein the job label is indicative of the respective robot task.

11. The method according to any of the 2 preceding claims, wherein each job behavior tree (40) comprises a plurality of phase subtrees, wherein each phase subtree comprises nodes which when executed cause the robot (100) to perform a robot subtask of the respective robot task;
wherein each phase subtree comprises a phase decorator node (450) configured to log phase data;
wherein the phase data comprise a phase label, wherein the phase label is indicative of the respective robot subtask.

12. The method according to any of the preceding claims, wherein the method comprises the interface module (20) and the executor module (30) communicating via a job communication channel (72);
wherein the method comprises the interface module (20) providing each job (52) to the executor module (30) via the job communication channel (72) and
wherein the job communication channel (72) utilizes a client-server communication protocol, wherein the interface module (20) implements the client and the executor module (30) implements the server.

13. A system comprising an interface component (25) and an executor component (30), wherein the system is configured to carry out the method according to any of the preceding claims.

14. The system according to the preceding claim, wherein the system further comprises a robot (100), wherein the robot (100) is adapted to pick up objects.

15. A computer program product comprising instructions which when executed by a system comprising an interface component (25) and an executor component (30) and further optionally a robot (100), causes the system to carry out the method according to any of claims 1 to 12.
